(19) Europäisches Patentamt
European Patent Office
Office européen des brevets

(11) **EP 3 960 962 B1**

(12) **FASCICULE DE BREVET EUROPEEN**

(45) Date de publication et mention de la délivrance du brevet:
**29.11.2023 Bulletin 2023/48**

(21) Numéro de dépôt: **21197630.3**

(22) Date de dépôt: **09.08.2019**

(51) Classification Internationale des Brevets (IPC):
*E04F 21/12* (2006.01)   *B28C 5/02* (2006.01)
*B05B 7/00* (2006.01)   *C04B 28/06* (2006.01)
*C04B 28/10* (2006.01)   *C04B 28/12* (2006.01)
*C04B 28/14* (2006.01)   *C04B 111/00* (2006.01)
*B05B 7/14* (2006.01)

(52) Classification Coopérative des Brevets (CPC):
(C-Sets disponibles)
**E04F 21/12; B05B 7/1481; B28C 5/026; C04B 28/06; C04B 28/065; C04B 28/10; C04B 28/12; C04B 28/14;** B05B 7/0093; B05B 15/62; C04B 2111/00172; C04B 2111/00577; Y02W 30/91          (Cont.)

(54) **PROCÉDÉ DE PROJECTION FAISANT INTERVENIR UNE LANCE DE PROJECTION D'UN MORTIER HUMIDE GRANULAIRE**

SPRÜHVERFAHREN, BEI DEM EINE LANZE ZUM VERSPRÜHEN EINES KÖRNIGEN NASSMÖRTELS ANGEWENDET WIRD

SPRAYING METHOD USING A NOZZLE FOR SPRAYING A GRANULAR WET MORTAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.08.2018 FR 1857438**

(43) Date de publication de la demande:
**02.03.2022 Bulletin 2022/09**

(62) Numéro(s) de document de la (des) demande(s) initiale(s) en application de l'article 76 CBE:
**19768913.6 / 3 833 831**

(73) Titulaire: **Sika Technology AG**
**6340 Baar (CH)**

(72) Inventeurs:
• **Daubresse, Anne**
  **38070 Saint Quentin Fallavier (FR)**
• **Sanchez, Eric**
  **38070 Saint Quentin Fallavier (FR)**

(74) Mandataire: **Sika Patent Attorneys**
**c/o Sika Technology AG**
**Corp. IP Dept.**
**Tüffenwies 16**
**Postfach**
**8048 Zürich (CH)**

(56) Documents cités:
**EP-A1- 0 509 502        DE-A1- 3 916 319**
**FR-A1- 2 955 103        US-A- 2 543 517**
**US-A1- 2016 244 375**

EP 3 960 962 B1

(52) Classification Coopérative des Brevets (CPC):
(Cont.)

C-Sets
**C04B 28/10, C04B 7/02, C04B 7/32, C04B 18/146,
C04B 18/248, C04B 24/08, C04B 2103/12,
C04B 2103/22, C04B 2103/40, C04B 2103/44,
C04B 2103/46;
C04B 28/10, C04B 7/02, C04B 14/042,
C04B 14/06, C04B 18/146, C04B 18/248,
C04B 22/10, C04B 24/06, C04B 24/08,
C04B 24/16, C04B 24/383;**

**C04B 28/12, C04B 7/02, C04B 14/042,
C04B 14/06, C04B 18/146, C04B 18/248,
C04B 22/10, C04B 24/06, C04B 24/08,
C04B 24/16, C04B 24/383;
C04B 28/14, C04B 7/02, C04B 7/32, C04B 14/042,
C04B 14/06, C04B 18/146, C04B 18/248,
C04B 22/064, C04B 22/10, C04B 24/06,
C04B 24/08, C04B 24/16, C04B 24/383**

**Description**

**Domaine technique**

Le domaine technique de l'invention est celui de la projection de matrices pâteuses granulaires sur des supports, notamment sur des ouvrages en béton armé ou de maçonnerie, tels que des bâtiments, des constructions de génie civil (ponts, tunnels, canalisations...).

En particulier, l'invention concerne la projection dans le secteur du bâtiment, de mortiers/bétons humides durcissables sur des supports plans ou en relief.

L'invention a précisément pour objet une lance de projection d'un mortier humide, un dispositif de projection de mortier humide comprenant cette lance, et un procédé de projection d'un mortier humide mettant en oeuvre cette lance ou ce dispositif.

Les supports comprenant le mortier durci, après projection du mortier humide, sont un autre objet de l'invention.

**Arrière-plan technologique**

La projection sur des supports tels que des parois de bâtiments de matrices pâteuses granulaires comprenant un liant organique ou inorganique, par exemple liant hydraulique tel qu'un ciment, des granulats minéraux (par ex. du sable) ou organiques (par ex. charges végétales biosourcées), différents additifs et de l'eau, est une technique utilisée depuis de nombreuses années notamment par des façadiers du bâtiment.

Pour ce faire, ces derniers utilisent des dispositifs qui comprennent une lance reliée à l'une des extrémités d'un conduit d'alimentation dont l'autre extrémité est connectée avec un réservoir en mortier humide à projeter. Une pompe permet le transfert du mortier humide projeté du réservoir vers la lance de projection. Cette dernière est également reliée à une source d'air comprimé qui contribue à la projection du mortier humide pompé hors de la lance sur le support.

Pour garantir la rentabilité de ce procédé de projection, il est essentiel que la lance de projection puisse être utilisée facilement par un seul opérateur. Cette contrainte de maniabilité suppose que la lance de projection et le conduit d'alimentation n'aient pas un diamètre trop important et ne soit pas trop lourds, pour ne pas rendre trop pénible et difficile leur manipulation par l'opérateur.

Cet impératif ergonomique a pour conséquence que la pompe la plus adaptée à ce type de dispositif de projection, est une pompe à vis.

Il est également important que cette lance de projection soit conforme à toutes les normes de sécurité en vigueur, en particulier au regard des risques de colmatage. En effet, la présence d'une charge granulaire et/ou fibreuse dans les mortiers pâteux à projeter, peut entraîner un colmatage/bourrage dans la lance de projection et/ou dans la pompe (en particulier dans les pompes à vis), et donc une surpression dont l'issue la plus grave peut-être une explosion susceptible de mettre en péril l'intégrité physique de l'opérateur.

Par ailleurs, la lance de projection doit produire un jet permettant d'obtenir un revêtement adhérent et homogène sur le support, de sorte que le revêtement durci ait toutes les qualités mécaniques, fonctionnelles (isolation, protection), d'aspect et de durabilité requises.

Le respect d'un tel cahier des charges se complique dès lors que les granulats du mortier humide à projeter présentent des formes non sphériques irrégulières et/ou des dimensions relativement importantes au regard des diamètres intérieurs de la lance de projection et/ou de la pompe.

Or, les préoccupations de développement durable amènent les acteurs du domaine du bâtiment à envisager l'utilisation, dans des bétons/enduits/mortiers projetés et à titre de charges granulaires, des matériaux végétaux biosourcés, des matériaux allégés et/ou des matériaux recyclés.

Au-delà d'un rôle de renfort mécanique, ces charges granulaires biosourcées, allégées et/ou recyclées, peuvent apporter au revêtement durci appliqué sur un support des qualités d'isolation thermique et/ou phonique, entre autres...

Pour ce qui concerne les matériaux recyclés, ils sont un enjeu majeur de la filière plastique. Certaines directives européennes ont en effet fixé pour objectif « zéro plastique en décharge en 2025 », « 55 % d'emballages plastiques préparés pour la réutilisation et recyclés d'ici à 2025 », « recycler sur le territoire européen 100 % des déchets plastiques collectés en France via l'amélioration de la qualité des matières plastiques recyclées », «accompagnement des filières de recyclage des plastiques du BTP », « inciter à l'incorporation de matières recyclées dans les produits plastiques », « stimuler l'innovation pour développer de nouvelles technologies ».

Cette mise en place, dans les décennies à venir, du principe d'économie circulaire ne concerne pas que les déchets plastiques, recyclables ou non recyclables, mais aussi les déchets produits par l'industrie du bâtiment. Ainsi, la loi française de transition énergétique a-t-elle fixé un objectif de 70 % de valorisation des déchets de construction et de démolition d'ici 2020. Cet objectif n'est pas facile à réaliser car la déconstruction des bâtiments va générer des fragments de matériaux composites qu'il est difficile et/ou trop coûteux d'isoler : par exemple, les systèmes d'isolation thermique par l'extérieur des façades une fois déconstruits, vont générer des granulats contenant des fragments de mortiers durcis et de plaques de polystyrène, polyuréthane ou bois. Ce type de matériaux composites, difficile à recycler, est habituellement mis en décharge. Il y a donc un fort enjeu à trouver une seconde vie à ce type de matériaux composites, afin de limiter, et la pollution liée à la mise en décharge et l'extraction de matières premières vierges.

Cette nécessité du recyclage se conjugue en effet avec la raréfaction des ressources en sable qui constitue le granulat universellement répandu dans le bâtiment, mais aussi une matière première incontournable pour certaines industries comme les microprocesseurs, le verre et même les pneus. Le sable est en effet la 2e ressource la plus utilisée de la planète après l'eau.

Les mortiers/bétons/enduits projetés peuvent donc contribuer significativement à ce processus vertueux d'économie circulaire. Aussi, la mise en oeuvre de charges granulaires de substitution dans des mortiers/bétons/enduits projetés est-elle un défi à relever pour les professionnels du domaine.

Le polymorphisme et la taille des granulats végétaux biosourcés ou des granulats recyclés sont au coeur des difficultés techniques à surmonter pour résoudre le problème de la "processabilité" de la projection de mortiers humides, au moyen de dispositifs de projection et en particulier de lances de projection.

Les lances et les dispositifs de projection connus à ce jour sont largement perfectibles. Le document US 2016/244375 A1 décrit un procédé de projection d'un mortier humide selon les caractéristiques du préambule de la revendication 1. Le document DE 39 16 319 A1 décrit une lance de projection de mortier.

**Problème technique - Objectifs de l'invention**

Dans ce contexte, le problème technique à la base de la présente invention est de satisfaire à au moins l'un des objectifs énoncés ci-après :

(i) Fournir une lance de projection d'un mortier humide permettant la projection aisée, sûre et performante de mortiers humides comprenant des granulats de granulométrie D50 comprise entre 1 et 15 millimètres, de préférence entre 3 et 6 millimètres.
(ii) Fournir une lance de projection d'un mortier humide permettant la projection aisée, sûre et performante de mortiers humides comprenant des granulats obtenus à partir de matériaux biosourcés, de matériaux allégés, et/ou de matériaux recyclés, dont des matériaux recyclés composites.
(iii) Fournir une lance de projection d'un mortier humide permettant la projection aisée, sûre et performante de mortiers humides comprenant des granulats non sphériques, polymorphes et/ou composites, cette projection pouvant être réalisée au moyen d'un dispositif de projection comprenant la lance, par un seul opérateur et sans risque de colmatage.
(iv) Fournir une lance de projection d'un mortier humide permettant la projection aisée, sûre et performante de mortiers humides comprenant des granulats non sphériques, polymorphes et/ou composites, cette projection permettant de réaliser des revêtements projetés dotés de bonnes caractéristiques mécaniques, fonctionnelles (isolation phonique/thermique) et esthétiques, ainsi qu'une longue durabilité (résistance aux intempéries).
(v) Fournir une lance de projection d'un mortier humide permettant la projection aisée, sûre et performante de mortiers humides comprenant des granulats non sphériques, polymorphes et/ou composites, cette lance permettant de conserver l'homogénéité du mélange constituant le mortier humide chargé de granulats polymorphes et de D50 par exemple comprise entre 1 et 15 mm, de préférence entre 3 et 6 mm.
(vi) Fournir un dispositif de projection comprenant la lance telle que visée dans les objectifs (i) à (v) ci-dessus, et qui soit performant, sûr, ergonomique et fiable.
(vii) Fournir un procédé de projection comprenant la lance telle que visée dans les objectifs (i) à (v) ci-dessus ou le dispositif selon l'objectif (vi), qui soit performant, sûr, ergonomique et fiable.

**Brève description de l'invention**

Il est du mérite des inventeurs d'avoir mis au point une lance de projection dont les caractéristiques sont adaptées au mortier humide comportant des granulats polymorphes et/ou composites, non sphériques de D50 compris dans un intervalle spécifique.

D'où il s'ensuit que la présente invention concerne un procédé de projection d'un mortier humide destiné à durcir pour former un élément de construction conformément à la revendication 1.

Cette configuration innovante de lance de projection pour mortier humide comprenant des granulats spécifiques de 1mm ≤ D50 ≤ 15 mm et de F#1, permet de produire, dans des conditions ergonomiques et avec un seul opérateur, un jet de mortier humide apte à se plaquer et à adhérer sur un support de bâtiment, quelle que soit la nature de ce support.

Par « conditions ergonomiques avec un seul opérateur », on fait référence, par exemple, à un poids et à un encombrement pour la lance de projection, ainsi qu'une pression de projection, qui soient adaptés à une projection aisée par un seul opérateur, et ce, pendant des durées qui correspondent au temps de travail normal d'un opérateur.

Le fait de pouvoir projeter sur un support, de manière aisée, rapide et efficace un mortier humide comprenant des granulats spécifiques de 1mm ≤ D50 ≤ 15 mm et de F≠1, est une véritable avancée technologique dans le domaine du bâtiment, et en particulier, pour les façadiers.

Cela ouvre des possibilités de production de mortiers extrêmement variées par la nature de leurs granulats. Il est ainsi envisageable de réaliser notamment des mortiers légers isolants comprenant des charges isolantes recyclées issues, par exemple, des matériaux constitués par des déchets de déconstruction, par des matériaux d'origine synthétique tels que ceux utilisés pour l'Isolation Thermique Extérieure (ITE), entre autres les polystyrènes expansés, polyuréthanes, résines phénoliques.... Cela permet également la valorisation en tant que mortiers isolants utilisables pour l'ITE, de matériaux non traditionnellement utilisés dans cette destination, comme les plastiques (polyesters, polyoléfines...), et, plus particulièrement, les plastiques non recyclables car chargés avec des fibres ou des charges minérales qui posent des problèmes rédhibitoires de séparation pour le recyclage (pare-chocs automobiles).

La lance de projection selon l'invention ainsi que la technologie associée, permet également de produire des mortiers isolants à base de charges minérales naturelles ou de synthèse comme la vermiculite, la perlite, billes de verre....

En outre, les mortiers projetables au moyen de la lance selon l'invention peuvent être des mortiers comportant du sable alternatif, c'est-à-dire des mortiers dans lesquels au moins une fraction du sable est substituée par des matériaux alternatifs, tels que tous les résidus provenant de la déconstruction des bâtiments.

Au-delà de la projection pour former des revêtements sur des supports, notamment de bâtiments, la lance de projection selon l'invention peut être utilisée pour fabriquer des objets en relief/tridimensionnels et/ou comme matériau de remplissage, par exemple, pour réaliser des parois, des dalles, des plafonds... La lance selon l'invention et le dispositif qui l'intègre, sont donc des outils performants de fabrication de bâtiments ou d'éléments préfabriqués de bâtiments. Une application particulièrement intéressante dans le domaine du bâtiment, pourrait être la réalisation d'habitats d'urgence.

*Définitions*

Dans tout le présent exposé, tout singulier désigne indifféremment un singulier ou un pluriel.

Les définitions données ci-après à titre d'exemples, peuvent servir à l'interprétation du présent exposé :

- "*mortier/béton/enduit/coulis*" désigne un mélange sec ou humide ou durci d'un ou plusieurs liants organiques et/ou minéraux, de granulats de D50 < 15mm (sables - agrégats) et éventuellement de fillers et/ou d'additifs et/ou d'adjuvants.
- "*sensiblement*" / "*environ*" / " *de l'ordre* de" signifie à plus ou moins 10 % près, voire plus ou moins pour 5% près, rapporté à l'unité de mesure utilisée.
- Le terme "*D50*" qui fait référence dans cet exposé au critère de granulométrie, désigne le diamètre médian. Cela signifie que 50% des particules ont une taille inférieure au "*D50*". La granulométrie est mesurée par tamisage suivant la norme EN12192-1.
- Sauf indication contraire, les % donnés dans le présent exposé sont des pourcentages en masse.

**Description détaillée de l'invention**

*LANCE*

Conformément à une caractéristique remarquable de l'invention, le conduit de guidage est conçu de telle sorte que le flux de mortier humide soit monodirectionnel et, par ailleurs, l'angle α entre la direction du flux de mortier humide et la direction du jet de fluide de projection, est tel que : α ≤ 45°; de préférence α ≤ 40°, et, plus préférentiellement encore α ≤ 35°.

De plus :

le conduit de guidage a un diamètre intérieur minimum D1 ;
la buse de projection du mortier présente une ouverture terminale de diamètre intérieur minimum D2 ;
· et D1/D2 ≥ 1.

De préférence :

20 ≤ D1 (en mm) ≤ 60; de préférence 25 ≤ D1 (en mm) ≤ 55; et, plus préférentiellement encore 30 ≤ D1 (en mm) ≤ 50 ;
10 ≤ D2 (en mm) ≤ 25; de préférence 13 ≤ D2 (en mm) ≤ 20; et, plus préférentiellement encore 15 ≤ D2 (en mm) ≤ 18.

Dans un mode de réalisation de la lance :

la buse de projection a une forme tronconique ;
et en ce que l'angle intérieur γ de cette buse est compris entre 5 et 30°, de préférence entre 10 et 25°, et, plus préférentiellement encore, entre 10 et 20°.

La lance a également les caractéristiques intéressantes suivantes :

l'entrée du corps de lance prévue pour l'admission du flux de mortier humide, est destinée à être reliée à un tuyau d'amenée du flux de mortier humide, de diamètre intérieur minimum D3 ;
· et D1 = D3 +/- 10%.

Dans un autre mode de réalisation de la lance :

elle comporte au moins un embout de connexion monté sur l'entrée du corps de lance prévue pour l'admission du flux de mortier humide ;
cet embout a un diamètre intérieur minimum D4 ;
cet embout est destiné à être relié à un tuyau d'amenée du flux de mortier humide, de diamètre intérieur minimum D3 ;
et D3 = D4 +/- 10%.

L'injecteur dispose avantageusement des caractéristiques remarquables suivantes :

l'injecteur est un tube sensiblement coaxial à la direction de projection ;
ce tube est enchâssé à l'intérieur du corps de lance au travers de l'ouverture d'injection;
ce tube peut coulisser en translation par rapport à l'ouverture ;
le mouvement de translation de ce tube par rapport à l'ouverture peut être bloqué à différentes positions.

*MORTIER HUMIDE*

La lance selon invention est conçue pour la projection simple aisée et efficace d'un mortier humide dans lequel au moins une fraction des granulats possède des dimensions et des caractéristiques de forme spécifiques (1mm $\leq$ D50$\leq$ 15 mm et de F$\neq$1).
Ces granulats non sphériques peuvent être par exemple aciculaires, ovoïdes, en forme de pelote d'aiguilles, de cristal, de fibres, fibrilles, poussières, poudre, copeaux, poils, anas...
Ces granulats sont de préférence choisis dans le groupe comprenant - idéalement constitué par - :

(i) les charges biosourcées, de préférence d'origine végétale, plus préférentiellement, les charges biosourcées d'origine végétale composées de cellulose, de cellulose et/ou de lignine; et, plus préférentiellement encore, celles choisies dans le sous-groupe comprenant - mieux encore constitué par - chanvre, lin, paille de céréale, avoine, riz, colza, maïs, sorgho, lin, miscanthus, balle de riz, canne à sucre, tournesol, kénaf, noix de coco, noyaux d'olive, bambou, bois, typha ou leurs mélanges ;
ces charges biosourcées d'origine végétale se présentant avantageusement sous au moins une forme particulaire, de préférence choisies parmi les fibres, les moelles notamment les moelles de tournesol, de maïs, de colza, des fibrilles, des poussières, les poudres, les copeaux et leurs mélanges ;
(ii) les charges minérales naturelles, de préférence celles choisies dans le sous-groupe comprenant - mieux encore constitué par - pierres ponces, roches volcaniques, déchets de carrières, granulats issus de terres agricoles, granulats de sédiments marins et fluviaux ;
(iii) les charges minérales synthétiques, de préférence celles choisies dans le sous-groupe comprenant - mieux encore constitué par - les vermiculites, les perlites, les billes de verre creuses, les déchets ou retours de production, de l'industrie céramique, telles que terres ou argiles crues, cuites ou fondues porcelaine, abrasifs électrofondus ou frittés, support de cuisson, xérogel de silice, verres, ou vitrocéramiques - ;
(iv) les charges non minérales synthétiques, de préférence celles choisies dans le sous-groupe comprenant - mieux encore constitué par -les plastiques thermoplastiques, thermodurcissables ou dérivés d'élastomères, chargés ou non de fillers minéraux tels que pare-chocs de voiture, polymères renforcés de fibres de verre ou de carbone, mieux encore constituées par les déchets des charges non minérales synthétiques précitées difficilement recyclables dans l'industrie plastique ;
(v) les charges issues de co-produits ou sous-produits industriels, de préférence celles choisies dans le sous-groupe comprenant -mieux encore constitué par- les laitiers, crasses ou scories des procédés de métallurgie primaire ou secondaire ; avantageusement les laitiers d'unités de fusion telles que cubilot, four à induction, four à arc ou haut-fourneaux ; de poches de traitement, de transfert, de maintien ou de coulée, de convertisseurs, d'unités de décarburation ou désulfurisation, d'unité de coulée continue ;

(vi) les sables minéraux utilisés pour le sablage, grenaillage ou nettoyage par projection sous pression ;

(vii) les granulats de déconstruction d'ouvrages de génie civil ou du bâtiment, à dominante minérale, de préférence choisies dans le sous-groupe comprenant - mieux encore constitué par - les déchets de bétons, de bétons cellulaires, de mortiers, de briques, de pierre naturelles, d'enrobés, de tuiles, de carrelages, de ferrailles, de mâchefer et leurs mélanges ;

(viii) les granulats de déconstruction d'ouvrages de génie civil ou du bâtiment à dominante organo-minérale ou organique, de préférence les matériaux composites, les matériaux isolants recyclés, avantageusement choisi dans le groupe comprenant - idéalement constitué par- les polystyrènes, les polyuréthanes, les résines phénoliques, les matériaux isolants en bois, et leurs mélanges ;

(ix) les mélanges de granulats (viii) avec des matrices minérales ;

(x) les granulats de déconstruction de garnissages réfractaires, de préférence celles choisies dans le sous-groupe comprenant - mieux encore constitué par - les granulats issus de la démolition de réfractaires monolithiques mise en place par damage, coulage projection, de réfractaires constitués de briques ou de réfractaires issus de pièces de forme telles que filtres, busettes de coulées, plaques à tiroirs, bouchons poreux ;

(xi) les plastiques non recyclables ou difficilement recyclables tels que les granulats de textiles usagés, les plastiques chargés (fibres de verre ou autres charges minérales), avantageusement, les plastiques constituant les pare-chocs automobiles, les revêtements de sols type linoléum ;

(xii) les matériaux granulaires non dangereux habituellement destinés à l'enfouissement, les sables de fonderies usagés, les supports de catalyseurs, les supports de traitement de de-soding du procédé Bayer, les granulats de mâchefer, les charges issues notamment du traitement des boues d'excavation, des boues d'épuration, des lisiers, des déchets papetiers, des cendres d'incinération papetières, des cendres d'incinération des ordures ménagères ; ces charges (i) à (xii) se présentent avantageusement sous au moins une forme particulaire, et étant de préférence choisies parmi les poussières, les poudres, les copeaux et leurs mélanges ;

(xiii) et leurs mélanges.

Les " *granulats de déconstruction à dominante minérale*", ont une fraction massique minérale supérieure ou égale à 95%.

Les " *granulats de déconstruction à dominante organo-minérale ou organique",* ont une fraction massique organique supérieure à 5%.

Quand ils sont d'origine végétale, ces granulats sont essentiellement composés de cellulose, d'hémicellulose et/ou de lignine. A titre d'exemples de composants de matières premières végétales, on peut citer : graine, tige, tronc, branche, feuille, fleur, fruit, noyau, moelle de tige, cosse, balle, écorce, bagasse, rafle,...

Ces granulats (1mm ≤ D50 ≤ 15 mm et de F≠1) peuvent être obtenus par broyage en utilisant des broyeurs à couteaux ou à marteaux.

A titre d'illustration, on peut indiquer qu'un broyage peut être effectué de la façon suivante :
Pour le chanvre, la balle de paille est posée sur un tapis d'amenée devant une « guillotine » (lame horizontale actionnée par pression hydraulique). La paille est sectionnée en brins de 30 à 50 cm de long. La paille tombe ensuite sur un tapis incliné qui l'amène dans une chargeuse où elle est débarrassée des poussières par soufflage, ainsi que des cailloux et des éventuels morceaux de métal. La paille est projetée sur un cylindre équipé de marteaux mobiles tournant à grande vitesse. On obtient un mélange de chènevotte, de fibres et de poussières qui sont ensuite séparés. A noter que le chanvre peut également être broyé avec des broyeurs à rouleaux ou procédés par « batteur ».

En ce qui concerne les granulats minéraux, ils sont obtenus par un concassage au broyeur à mâchoires destinés à transformer les blocs de déconstruction en un sable de granulométrie 0 - 4 mm, éventuellement suivi d'un passage au broyeur pendulaire ou similaire destiné à maximiser la fraction 0 - 0,5 mm.

Selon l'invention, au moins une partie de ces granulats ont une granulométrie D50, comprise entre 1 et 15 mm, de préférence entre 3 et 6 mm et un facteur de forme F défini comme étant le rapport de la plus grande dimension d'un granulat sur sa plus petite dimension, tel que F différent de 1.

Dans un mode particulier de réalisation, cette partie de granulats de D50 compris entre 1 et 15 mm, de préférence entre 3 et 6 mm, avec F différent de 1, représente au moins - en % en poids sur sec par rapport à la masse totale des granulats et dans un ordre croissant de préférence - :

0,1 ; 0,5 ; 1 ; 5 ; 10 ; 20; 30 ;
et par exemple entre - en % en poids sur sec par rapport à la masse totale des granulats et dans un ordre croissant de préférence - :
30 et 99 ; 40 et 80 ; 45 et 75.

Outre les granulats, le mortier humide contient au moins un liant qui comprend :

- en % en poids/poids sur sec et dans un ordre croissant de préférence- :

  - L1- liant primaire : [5 - 95] ; [10 - 85] ; [15 - 75] ;
    dont :

    o chaux : [10 - 95] ; [20 - 70] ; [30 - 60] ;
    o source d'alumine et/ou source de sulfate de calcium :
    [1 -90] ; [5 - 30] ; [7 - 15] ;

  - L2- agent rétenteur d'eau : [0,1 - 5] ; [0,5 - 3] ; [0,8 - 2] ;
  - L3- surfactant : [0,01 - 1]; [0,05 - 0,5] ;
  - L4- liant secondaire [0 - 95] ; [5 - 50]; [7 - 15] ;
  - L5- charge minérale lubrifiante de granulométrie d90 inférieure à 100$\mu$m :
    [0 - 40] ; [0 - 30]; [0 - 20] ;
  - L6- charge minérale d'espacement de granulométrie d90 supérieure ou égale à 100$\mu$m : [0 - 40] ; [0 - 35]; [0 - 30] ;
  - L7- adjuvant hydrofuge : [0 - 1,5] ; [0 - 1]; [0 - 0,5] ;
  - L8- adjuvant retardateur de prise: [0 -3] ; [0 - 2]; [0 - 1] ;
  - L9- adjuvant accélérateur de prise: [0 - 3] ; [0 - 2]; [0 - 1] ;
  - L10- adjuvant épaississant: [0 - 2] ; [0,1 - 1]; [0,2- 0,8].

Liant primaire.

Le liant primaire -L1- comprend de la chaux et/ou au moins une source d'alumine de calcium et/ou une source de sulfate de calcium.

Conformément à un mode préféré de réalisation de l'invention, le liant primaire A1 comprend de la chaux et au moins une source d'alumine.

La chaux est une chaux aérienne et/ou hydraulique.

La chaux aérienne visée est du type de celles conformes à la norme NF EN 459-1, de préférence choisi dans le groupe comprenant-idéalement constitué de - :

- une chaux aérienne calcique (CL) contenant de l'oxyde de calcium (CaO) et/ou de l'hydroxyde de calcium (Ca(OH) 2) dont la somme CaO + MgO est d'au moins 70% et la teneur en MgO < 5% ;
- de la chaux dolomitique (DL) contenant de l'oxyde de calcium magnésium (CaO MgO) et/ou de l'hydroxyde de calcium magnésium (Ca(OH) 2Mg(OH) 2) dont la somme CaO + MgO est d'au moins 80%, et la teneur en MgO varie de 5% à plus de 30%> ;
- ou leurs mélanges.

La chaux aérienne mise en oeuvre peut se présenter sous diverses formes comme une pâte, une poudre ou, pour la chaux vive, la roche elle-même.

La chaux hydraulique visée est du type de celles conformes à la norme NF EN 459-1.

Tout mélange de chaux de quelque type que ce soit, sous quelque forme que ce soit, peut contenir de la composition selon l'invention.

La source d'alumine est de préférence choisie parmi les ciments prompts, les ciments à base d'aluminate de calcium (CAC), les ciments à base de sulfo-aluminate de calcium (CSA), les liants à haute teneur en phases cimentaires riches en alumine ou les mélanges de ces ciments ou de ces liants pris isolément ou ensemble.

Plus préférentiellement encore, la source d'alumine est sélectionnée parmi les liants hydrauliques comprenant :

o au moins une phase choisie parmi $C_3A$, $CA$, $C_{12}A_7$, $C_{11}A_7CaF_2$, $C_4A_3\$$ (yée lemite), $C_2A_{(1-x)}F_x$ (avec $C \rightarrow CaO$ ; $A \rightarrow Al_2O_3$; $F \rightarrow Fe2O3$ et x appartenant à ]0,1]) ;
o des phases amorphes hydrauliques présentant un ratio molaire C/A compris entre 0,3 et 15 ;
o et tels que les teneurs cumulées en $Al_2O_3$ de ces phases soient comprises entre

3 et 70 % en poids du total du liant hydraulique,
préférentiellement entre 7 et 50% en poids,
et mieux entre 20 et 30% en poids.

Les CAC sont des ciments comprenant une phase minéralogique C4A3$, CA, C12A7, C3A ou C11A7CaF2 ou leurs mélanges, tel que par exemple les Ciments Fondu®, les ciments sulfoalumineux, les ciments d'aluminates de calcium conformes à la norme européenne NF EN 14647 de décembre 2006, le ciment obtenu à partir du clinker décrit dans la demande de brevet WO2006/018569 ou leurs mélanges.

Les clinkers sulfoalumineux sont obtenus à partir d'un mélange de carbonate de calcium sous forme calcaire, de bauxite ou d'une autre source d'alumine (par exemple sous produit de type dross) et de sulfate de calcium, qui est soit du gypse, de l'anhydrite ou de l'hémihydrate ou des mélanges. Le constituant spécifique à l'issue du processus de fabrication est la Yeelimite, C4A3$. On peut utiliser en particulier des ciments Prompt ou ciments sulfoalumineux qui contiennent des teneurs en Yeelimite comprise entre 3% et 70% qui peuvent être commercialisés par Vicat, Italcementi, Lafarge-Holcim, Polar Bear, Liu Jiu, Readerfast.

Par exemple, un ciment naturel prompt est constitué d'un clinker contenant :

- de 0% à 35% de C 3S ;
- de 10% à 60% de C 2S ;
- de 1% à 12% de C 4AF ;
- de 1% à 10% de C 3A ;
- de 5% à 50% de CaC0 3(calcite) ;
- de 10% à 15% de Ca 5(Si0 4) 2C0 3(spurrite) ;
- de 3 à 10%) de phases sulfates : yee'limite (C 4A 3$), Langbeinite (K 2Mg 2(S0 4) 3, anhydrite (C$) ; et
- de 10 à 20%) de chaux, de périclase, de quartz et/ou d'une ou plusieurs phases amorphes.

Avantageusement, la source de sulfate de calcium est choisie parmi les anhydrites, les gypses, les semi-hydrates de calcium, les ciments supersulfatés et leurs mélanges.

La source de sulfate de calcium, naturelle ou de synthèse, est choisie parmi les anhydrites, les gypses, les semi-hydrates de calcium ou les mélanges de ces espèces prises isolément ou ensemble.

<u>Agent rétenteur d'eau</u>

De préférence, le rétenteur d'eau -L2- est doté d'une rétention d'eau supérieure ou égale à -selon un ordre croissant de préférence- 50, 60 , 70 , 80 , 90 % , suivant la méthode de mesure de la rétention M1, ce rétenteur d'eau étant de préférence choisi parmi les polysaccharides, et, plus préférentiellement encore dans le groupe comprenant -ou mieux encore constitué par- les éthers de cellulose ou d'amidon et leurs mélanges; les uloses, les hydroxyéthylcelluloses, les hydroxypropylcelluloses, les méthylhydroxypropylcelluloses, les méthylhydroxyéthylcelluloses et leurs mélanges; les éthers de guar modifiés ou non et leurs mélanges; ou le mélange de ces différentes espèces.

L'agent rétenteur d'eau L2 a de préférence une viscosité à 2% dans l'eau, mesuré au viscosimètre HAAKE rotovisco RV100, shear rate de 2,55 $s^{-1}$ à 20°C comprise entre 5000 et 70000 cp, préférentiellement entre 20000 et 50000.

Le rétenteur d'eau L2 a la propriété de conserver l'eau de gâchage avant la prise. L'eau est ainsi maintenue dans la pâte de mortier ou béton, ce qui lui confère une très bonne adhérence et une bonne hydratation. Dans une certaine mesure, elle est moins absorbée sur le support, le relargage en surface est limité et on a ainsi peu d'évaporation.

La méthode **M1** de mesure du temps de rétention d'eau d'un mortier humide correspond à une adaptation de la méthode dite du filtre.

***Appareillage :***

- Moule métallique.

  *Dimensions inférieures* :
  *Diamètre haut : 100 + 5 mm.*
  *Diamètre du fond : 80 +/- 5 mm.*
  *Hauteur. 25 + 1 mm.*
  *Dimensions extérieures* :
  *Diamètre: 120 +/- 5 mm.*
  *Hauteur. 30 + 1 mm.*

- Spatule
- Carreau de faïence (dimension : environ 120 mm x 5 mm)
- Balance de précision 0,01 g
- Papier filtre de 100 mm. de diamètre (type Schleicher ou le filtre-Lab 0965 NW 25 L) : filtre de séparation.

(i). Papier filtre de 100 mm. de diamètre (Schleicher 2294 ou le filtre-Lab S-Type 600)

*Protocole :*

1. L'échantillon est préparé selon le mode de malaxage décrit dans le test T2.
2. Peser le moule vide et sec → $m_A$
3. Peser le papier filtre Schleicher 2294 ou le filtre-Lab S-Type 600) → me
4. Remplir le moule avec le mortier de chanvre à l'aide d'une spatule, dépasser légèrement pour assurer un contact du filtre et de la pâte.
5. Peser le moule rempli → $m_C$
6. Couvrir la pâte avec le papier filtre de séparation (type Schleicher ou le filtre-Lab 0965 NW 25 L) et ensuite placer le filtre 2294 ou S-600 sur l'ensemble
7. Placer le carreau de faïence sur l'ensemble et retourner le tout, démarrer le chronomètre, le temps d'essai est de 15 minutes,
8. Après 15 minutes, récupérer le papier filtre 2294 ou S-600 et le peser → $m_D$

*Expression des résultats :*

Calcul 1: masse d'eau contenue dans le produit

$$M\mathit{eau} = ((m_C\text{-}m_A) * Tg\%)/ (100 + Tg\%)$$

Calcul 2: perte d'eau du produit

$$\Delta\mathit{eau} = (m_D\text{-}m_B)$$

Calcul 3: Rétention d'eau en %

$$R\% = ((M\mathit{eau} - \Delta\mathit{eau})/ M\mathit{eau})*100$$

*EN 1015-8 : Methods of test for mortar masonry - Part 8 : Determination of water retentivity of fresh mortar. (September 1999)*

Surfactant

Les surfactants L3 sont de préférence choisis parmi :

i. les sources de surfactants anioniques de type par exemple, alkyl sulfates, alkyl éther sulfates, alkaryl sulfonates, les alkylsuccinates, alkylsulpho succinates, alkoyl sarcosinates, alkyl phosphates, alkylether phosphates, alkylether carboxylates, et alpha oléfine sulfonates, préférentiellement le lauryl sulfate de sodium ;
ii. Les surfactants non ioniques de type alcools gras ethoxylés, mono ou di alkyl alkanolamides, les alkyl polyglucosides ;
iii. Les surfactants amphotériques de type alkyl amine oxides, alkyl betaines, alkyl amido propylbétaïne, alkylsulphobétaïnes, alkylglycinates, alkyl amphopropionates, alkyl amidopropylhydroxysultaïnes ;
iv. les polyols de polyéther, les molécules hydrocarbonées, les molécules siliconés, esters hydrophobes ;
v. les tensioactifs non ioniques ;
vi. les polyoxiranes ;
vii. ou leurs mélanges.

A titre de tensioactifs ioniques, on peut citer de façon non limitative les alkyléthersulfonates, les hydroxyalkyléthersulfonates, les alphaoléfinesulfonates, les alkylbenzènesulfonates, les alkylesters sulfonates, les alkyléthersulfates, les hydroxyalkylethersulfates, les alphaoléfinesulfates, les alkylbenzènesulfates, les alkylamides sulfates, ainsi que leurs dérivés alcoxylés (notamment éthoxylés (0E) et/ou propoxylés (OP)), les sels correspondants ou leurs mélanges. A titre de tensioactifs ioniques, on peut également citer de façon non limitative les sels d'acides gras saturés ou insaturés et/ou leurs dérivés alcoxylés notamment (0E) et/ou (OP) (comme par exemple le laurate de sodium, le palmitate de sodium ou le stéarate de sodium, l'oléate de sodium), les lauréates de méthyle et/ou de sodium alpha sulfonés, les alkylglycérol sulfonates, les acides polycarboxyliques sulfonés, les sulfonates de paraffine, les N-acyl N-alkyltaurates, les alkylphosphates, les alkylsuccinamates, les alkylsulfosuccinates, les monoesters ou diesters de sulfosuccinates, les sulfates d'alkylglucosides. PA12011 FR A titre de tensioactifs non ioniques, on peut citer de façon non limitative les alcools gras éthoxylés, les alkylphénols alcoxylés [notamment (OE) et/ou (OP)], les alcools aliphatiques plus particulièrement en 08-022, les produits résultant de la condensation de l'oxyde d'éthylène ou de l'oxyde de propylène avec le propylène glycol ou l'éthylène glycol, les produits résultant de la condensation de l'oxyde d'éthylène ou de l'oxyde de propylène avec l'éthylène diamine, les amides d'acides gras alcoxylés (notamment (0E) et/ou (OP)), les amines alcoxylés (notamment (OE) et/ou (OP)), les amidoamines alcoxylés [notamment (OE) et/ou (OP)], les oxydes d'amines, les hydrocarbures terpéniques alcoxylés [notamment (OE) et/ou (OP)], les alkylpolyglucosides, les polymères ou oligomères amphiphiles, les alcools éthoxylés, les esters de sorbitan ou les esters de sorbitan éthoxylés. A titre de tensioactifs amphotères, on peut citer de façon non limitative les bétaïnes, les dérivés de l'imidazoline, les polypeptides ou les lipoaminoacides. Plus particulièrement, les bétaïnes convenant selon l'invention peuvent être choisies parmi la cocamidopropyl bétaïne, la bétaïne dodécylique, la bétaïne hexadécylique, la bétaïne octadécylique, les phospholipides et leurs dérivés, les esters d'acides aminés, les protéines hydrosolubles, les esters de protéines hydrosolubles et leurs mélanges. A titre de tensioactifs cationiques, on peut également citer de façon non limitative l'oxide d'amino-laurate, l'oxide d'amino propyl cocoate, le caprylamphocarboxy glycinate, le lauryl propionate, le lauryl de bétaïne, le talloil bis 2-hydroxyethyl de bétaïne. Selon un mode de réalisation particulier de l'invention, l'agent moussant non ionique peut être associé à au moins un agent moussant anionique ou cationique ou amphotère.

A titre de tensioactifs amphiphiles, on peut citer de façon non limitative les polymères, oligomères ou copolymères au moins miscibles en phase aqueuse. Les polymères ou oligomères amphiphiles peuvent avoir une répartition statistique ou une répartition multibloc. Les polymères ou oligomères amphiphiles utilisés selon l'invention sont choisis parmi les polymères à blocs comprenant au moins un bloc hydrophile et au moins un bloc hydrophobe, le bloc hydrophile étant obtenu à partir d'au moins un monomère non ionique et/ou anionique. A titre d'exemple de tels polymères ou oligomères amphiphiles, on peut citer notamment les polysaccharides ayant des groupements hydrophobes, notamment des groupements alkyle, le polyéthylène glycol et ses dérivés. PA12011 FR A titre d'exemple de polymères ou oligomères amphiphiles, on peut également citer les polymères triblocs polyhydroxystéarate - polyéthylène glycol - polyhydroxystéarate, les polymères acryliques ramifiés ou non, ou les polymères polyacrylamides hydrophobes.

Pour ce qui a trait aux polymères amphiphiles non ioniques plus particulièrement alcoxylés [notamment Oxyde d'Ethylène (OE) et/ou oxyde de Propylène (OP)], ces derniers sont plus particulièrement choisis parmi les polymères dont au moins une partie (au moins 50 % en masse) est miscible dans l'eau. A titre d'exemples de polymères de ce type, on peut citer entre autres les polymères triblocs polyéthylène glycol / polypropylène glycol / polyéthylène glycol. De préférence, l'agent moussant utilisé selon l'invention est une protéine, en particulier une protéine d'origine animale, plus particulièrement la kératine, ou une protéine d'origine végétale, plus particulièrement une protéine hydrosoluble de blé, de riz, de soja ou de céréales. A titre d'exemple, on peut citer le sodium laurate d'hydrolysat de protéine de blé, le laurate d'hydrolysat de protéine d'Oat, ou le sodium cocoate d'acides aminés de pomme. De préférence, l'agent moussant utilisé selon l'invention est une protéine dont le poids moléculaire est compris de 300 à 50 000 Daltons. L'agent moussant est utilisé selon l'invention à une teneur de 0,001 à 2, de préférence de 0,01 à 1 % en masse, plus préférentiellement de 0,005 à 0,2 % en masse d'agent moussant par rapport à la masse du liant.

Liant secondaire

Dans un mode préféré de réalisation de l'invention, la composition comprend au moins un liant secondaire -L4- choisi parmi les ciments portland, les laitiers, les méta kaolins, les ciments géopolymères, les pouzzolanes naturelles, les silicates de sodium, les silicates de potassium, les silicates de lithium, les liants organiques ou leurs mélanges.

Par exemple, un ciment artificiel Portland convenant à titre de liant secondaire A4, comprend :

- de 20% à 95% d'un clinker contenant :

  • de 50% à 80% de C 3S ;
  • de 4% à 40% de C 2S ;
  • de 0% à 20% de C 4AF ; et
  • de 0% à 2% de C 3A ;

- de 0% à 4% de $ ;
- de 0%) à 80%) de laitier de haut fourneau, de fumée de silice, de pouzzolanes et/ou de cendres volantes.

Le métakaolin résulte de la calcination d'une argile, la kaolinite, associée à différents minéraux (quartz, phyllosilicates, oxydes de fer...) en proportion variable suivant les gisements. Il est obtenu par des opérations de broyage et calcination dans des fours rotatifs, fours à plateaux ou par un procédé de calcination « flash ».
Cette thermoactivation de la kaolinite permet d'obtenir un silicate d'alumine amorphe et réactif.
Selon une variante, L4 est un liant organique choisi dans le groupe comprenant - idéalement constitué par- : les poudres polymères redispersables, les (co)polymères époxy, les (co)polyuréthanes, et leurs mélanges.

Charge minérale lubrifiante

La charge minérale lubrifiante L5 de granulométrie d90 inférieure à 100$\mu$m, est de préférence choisie :

- parmi les minéraux silicatés naturels et synthétiques et, plus préférentiellement encore parmi les argiles, les micas, les kaolins et les métakaolins, les fumées de silice, les cendres volantes et leurs mélanges,
- parmi les fillers calcaires, ou silico-calcaires,
- parmi les cendres volantes,
- ou parmi leurs mélanges.

Avantageusement, le liant comprend des particules lubrifiantes, c'est-à-dire des particules permettant un bon écoulement du mortier pâteux dans les tuyaux de projection; Ces particules confèrent en général un caractère « rhéofluidifiant » au mortier pâteux, le seuil d'écoulement du mortier étant ainsi réduit au contact de la paroi.

Charge minérale d'espacement

La charge minérale L6 d'espacement de granulométrie d90 supérieure ou égale à 100$\mu$m, est de préférence choisie parmi les sables siliceux, calcaires ou silico-calcaires, les charges légères, lesquelles étant plus particulièrement choisies parmi la vermiculite expansée ou non, la perlite expansée ou non, les billes de verre expansées ou non [billes de verre creuses (type 3M®) ou granulés de verre expansés (Poraver®, Liaver®)], les aérogels de silice, le polystyrène expansé ou non, les cénosphères (fillites), les billes creuses d'alumine, les argiles expansées ou non, les ponces, les grains de mousse de silicate, la rhyolithe (Noblite®), ou leurs mélanges.

Adjuvant_hydrofuge :

L'hydrofugeant L7 est de préférence choisi dans le groupe comprenant ou mieux encore constitué par les agents fluorés, silanisés, siliconés, siloxanés, les sels métalliques d'acides gras et leurs mélanges, de préférence parmi les sels de sodium, potassium et/ou magnésium des acides oléique et/ou stéarique et leurs mélanges.

- Adjuvant retardateur de prise :

Le retardateur de prise L8 est de préférence choisi dans le groupe comprenant ou mieux encore constitué par les agents chélatants du calcium, les acides carboxyliques et leurs sels, les polysaccharides et leurs dérivés, les phosphonates, les lignosulphonates, les phosphates, les borates, et les sels de plomb, zinc, cuivre, arsenic et antimoine, et plus particulièrement parmi l'acide tartrique et ses sels, de préférence ses sels de sodium ou de potassium, l'acide citrique et ses sels, de préférence son sel de sodium (citrate trisodique), les gluconates de sodium; les phosphonates de sodium ; les sulfates et leurs sels de sodium ou de potassium, et leurs mélanges.

Adjuvant accélérateur de prise :

L'accélérateur de prise L9 est, de préférence, choisi dans le groupe comprenant ou mieux encore constitué par les sels alcalins et alcalino-terreux d'hydroxydes, d'halogénures, de nitrates, de nitrites, de carbonates, de thiocyanates, de sulfates, de thiosulfates, de perchlorates, de silice, d'aluminium, et/ou parmi les acides carboxyliques et hydrocarboxyliques et leurs sels, les alcanolamines, les composés insolubles silicatés tels les fumées de silices, cendres volantes ou pouzzolanes naturelles, les ammonium quaternaires silicatés, les composés minéraux finement divisés tels les gels de silice ou les carbonates de calcium et/ou de magnésium finement divisés, et leurs mélanges; cet accélérateur de prise complémentaire (e) étant de préférence choisi dans le groupe comprenant ou mieux encore constitué par parmi les chlorures et leurs sels de sodium ou calcium ; les carbonates et leurs sels de sodium ou lithium, les sulfates et leurs sels de sodium ou de potassium, les hydroxydes et formiates de calcium et leurs mélanges.

-Adjuvant épaississant :

L10 est un adjuvant différent de L2 permettent d'améliorer le seuil d'écoulement du mortier (tenue en charge).
De préférence, cet adjuvant épaississant est choisi dans le groupe comprenant ou mieux encore constitué par les polysaccharides et leurs dérivés, les alcools polyvinyliques, les épaississants minéraux, les polyacrylamides linéaires et leurs mélanges.

*DISPOSITIF DE PROJECTION*

Ce dispositif comprend au moins une pompe de mise en circulation du mortier humide, éventuellement au moins une source de fluide de projection, de préférence de l'air comprimé et au moins une lance de projection selon l'invention.
Dans un mode préféré de réalisation du dispositif selon l'invention, la pompe de mise en circulation du mortier humide est choisie parmi les pompes à vis excentrées présentant au moins l'une des caractéristiques suivantes :

**P.1.** jaquette de pompage avec un entrefer (E) entre rotor et stator compris entre 4 et 30 mm, de préférence entre 6 et 10 mm ;

**P.4.** jaquette de pompage avec un stator en élastomère de dureté Shore comprise entre 30 et 60, de préférence entre 35 et 50, et plus préférentiellement encore de l'ordre de 43 ;

**P.5.** une pression de rupture inférieure ou égale à 150 bars, de préférence comprise entre 100 et 120 bars ;

**P.6.** une pression de service pour le flux de mortier humide comprise entre 10 et 30 bars, de préférence entre 15 et 20 bars.

Sur une caractéristique remarquable de l'invention, ce dispositif comprend au moins l'un des éléments supplémentaires suivants :

• au moins une source de mortier humide ;
• au moins un compresseur du fluide de projection ;
• au moins un conduit d'amenée du flux de mortier humide ;
• au moins une canalisation d'alimentation en fluide de projection ;
• de préférence une ou plusieurs vannes équipant les circuits de flux de mortier humide et/ou de flux de projection.

*PROCEDE DE PROJECTION*

Le procédé selon invention de projection d'un mortier humide comprend les étapes e.1, e.2, et a également pour caractéristique que les granulats du mortier humide sont choisis dans le groupe des charges (i) à (xiii) susvisées.
Dans ce procédé, l'élément de construction en mortier durci est avantageusement choisi dans le groupe comprenant - idéalement constitué par- un enduit de façade intérieur ou extérieur, un ragréage et/ou un ravoirage de sols, un remplissage de combles, un remplissage de coffrage de bâtiment à ossature, un élément de préfabrication, un mortier d'isolation technique et/ou phonique.

**Exemple de réalisation de la lance et du dispositif de projection**

La description de cet exemple se fait en référence aux figures annexées dans lesquelles :

- les figures 1 & 1A sont des vues schématiques générales du dispositif de projection selon l'invention ;
- la figure 2 est une vue de face de la lance de projection selon l'invention ;
- la figure 2A est une vue en coupe transversale selon la ligne IIA-IIA de la figure 2 ;
- la figure 3 est une vue du côté droit du corps de lance de la figure 2 ;
- la figure 3A est une vue en coupe longitudinale selon la ligne IIIA-IIIA de la figure 3 à laquelle ont été ajoutés la buse 50, l'embout 60 et le conduit 30 ;
- la figure 4 est une vue en perspective de la lance de projection selon l'invention ;
- la figure 5 est une vue de côté de la buse 50 de la lance de projection 1 selon l'invention ;

- la figure 5A est une vue en coupe longitudinale selon la ligne VA-VA de la figure 5 ;
- la figure 6 est une vue de face de la buse 50 de la lance de projection 1 selon l'invention.

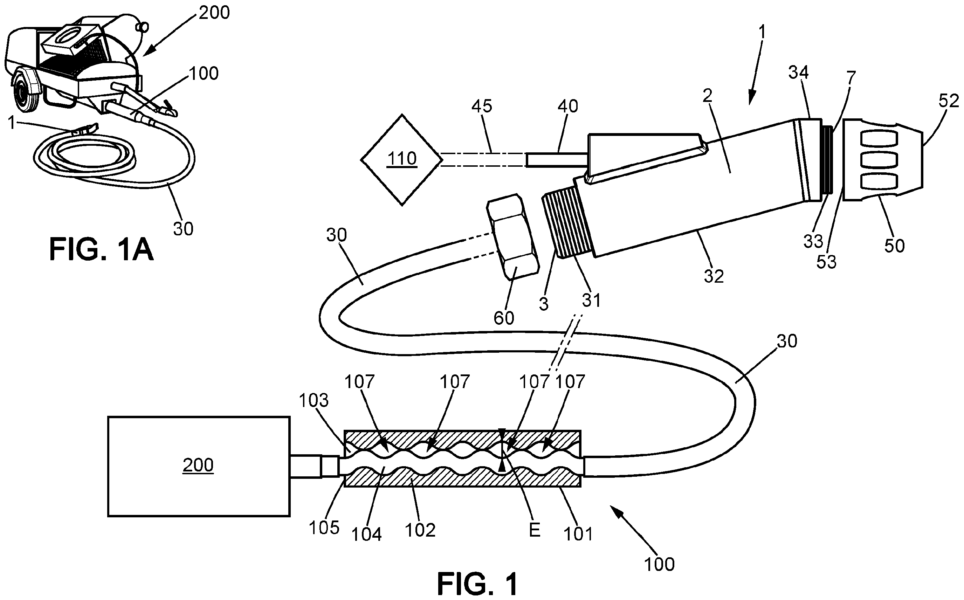

Comme montré sur la figure 1, le dispositif de projection d'un mortier humide comprenant des granulats (1mm ≤ D50 ≤ 15 mm et de F≠1) comporte :

- la lance de projection 1 du mortier humide ;
- une pompe à vis 100 de mise en circulation du mortier humide ;
- une source 200 de mortier humide constitué par un mélangeur pour la préparation de celui-ci ;
- un compresseur 110 du fluide de projection ;
- un conduit 30 d'amenée du flux de mortier humide vers la lance 1 ;
- une canalisation 45 d'alimentation de la lance 1 en fluide de projection.

→ Lance de projection 1 :

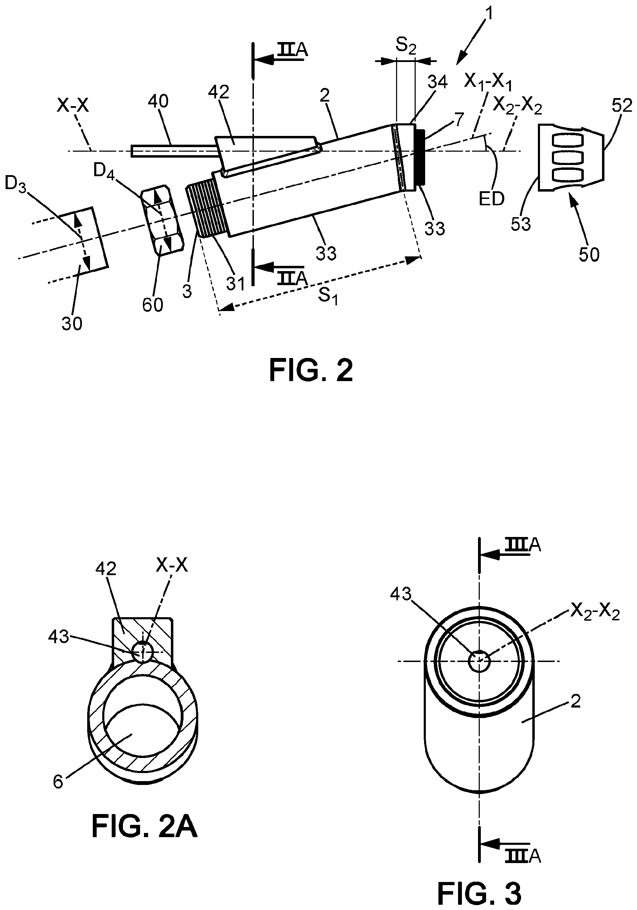

Comme cela apparaît sur la figure 1, et plus en détail sur les figures 2, 2A, 3, 3B & 4, la lance de projection 1 comprend un corps 2 de lance, un injecteur 40, une buse 50 de projection, et un embout 60 de connexion.

Le corps 2 de lance 1 est un élément tubulaire de section circulaire, de préférence en métal : par exemple en inox, présentant une ouverture d'entrée 3 et une ouverture 7 de sortie pour le flux de mortier humide. La figure 2 montre que cet élément tubulaire 2 comprend un premier segment S1 sensiblement rectiligne dont l'extrémité libre est l'entrée 3, et un second segment S2, de plus faible longueur que le premier segment dont l'extrémité libre est la sortie 7. Les axes X1-X1 & X2-X2 des segments S1 et S2 sont décalés angulairement d'un écart angulaire ED, qui correspond au changement de direction du flux de mortier humide. ED est inférieur ou égal à - dans un ordre croissant de préférence- 30° ; 20° ; 18° ; 16°, 15° et 10°.

A partir de l'ouverture d'entrée 3, le segment S1 comporte une partie terminale 31 filetée à l'extérieur et une partie principale 32. Le diamètre extérieur de la partie terminale filetée 31 est inférieur à celui de la partie principale 32.

De la même façon, le segment S2 présente une partie terminale filetée 33 et une partie principale 34 qui prolonge la partie principale 32 du segment S1. Le diamètre extérieur de la partie terminale filetée 33 est inférieur à celui de la partie principale 34.

La partie terminale filetée 31 prolongée par un tronçon de la partie principale 32 du segment S1, définissent un conduit 6 de guidage du flux de mortier humide provenant du conduit d'amenée 30. Le conduit 6 de guidage a un diamètre intérieur minimum D1 environ égal dans cet exemple de réalisation à 40 mm.

De préférence, le diamètre intérieur minimum D1 du conduit 6 correspond également au diamètre intérieur minimum de la chambre 5 de mélange et au diamètre intérieur minimum de l'ouverture 7 de sortie pour le flux de mortier humide.

Le corps 2 de lance 1 est également pourvu d'une proéminence 42 périphérique s'étendant parallèlement au plan longitudinal médian du corps 2 de lance 1 et vers le haut en prenant pour référentiel le haut et le bas des planches de figures. Cette proéminence 42 présente un alésage 43 de section circulaire et dont l'axe X-X se confond avec l'axe X2-X2 du segment S2 du corps 2 de lance 1. Cet axe X-X :

- forme un angle $\alpha$ avec l'axe X1-X1 du segment S1 du corps de lance 2 ;
- et présente un écart angulaire ED avec l'axe X2-X2 du segment S2 du corps 2 de lance 1.

ED est tel que défini ci-dessus, par exemple égal à 15°.

L'alésage 43 définit ainsi une ouverture 4 d'injection d'un jet de fluide de projection, à savoir par exemple de l'air comprimé. À l'opposé de l'ouverture 4, cet alésage 43 débouche dans la lumière du corps 2 de lance 1, dans une zone située juste en aval du conduit de guidage 6. Cette zone définit la chambre 5 de mise en contact du jet d'air comprimé avec le flux de mortier humide.

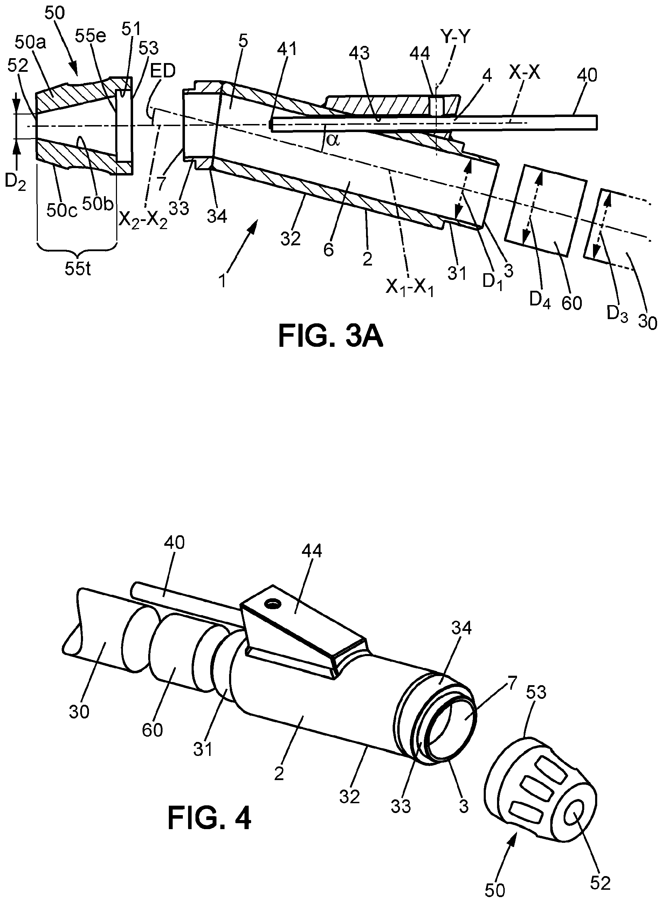

Un alésage 44 de section circulaire et d'axe Y-Y perpendiculaire à l'axe X-X, est prévu dans la proéminence 42, comme cela est représenté sur les figures 3A & 4.

L'injecteur 40 est un tube de section circulaire dont l'une des extrémités forme la tête d'injection 41. Le diamètre extérieur de l'injecteur 40 est tel qu'il permet son introduction et son coulissement dans l'alésage 43.

Dans ce mode de réalisation préféré, le coulissement de l'injecteur 40 dans l'alésage 43 peut être bloqué en translation au moyen d'une vis (e.g. une vis-pointeau) propre à être vissée dans l'alésage 44 dont la paroi intérieure possède le filetage adéquat. Cette disposition avantageuse permet le réglage de la position de la tête d'injection 41 de l'injecteur 40, au sein de la chambre 5 de mise en contact.

Cet injecteur 40 est par exemple métallique : *e.g.* en acier inox.

L'injecteur 40 est introduit dans l'alésage 43, de telle sorte que la tête 41 débouche dans la chambre 5 de mise en contact. L'injecteur 40 et l'alésage 43 sont coaxiaux (axe X-X).

Cet axe X-X de l'injecteur 40 et de l'alésage 43 ou l'axe X2-X2 X2 du segment S2 du corps 2 de lance 1, correspond également à la direction de projection du mortier humide propulsé par l'air comprimé issu de l'injecteur 40.

L'angle $\alpha$ entre l'axe X-X et l'axe X1-X1 est aussi l'angle entre la direction du jet de fluide de projection, à savoir l'air comprimé, et la direction du flux de mortier humide dans le conduit 6 de guidage, juste avant la mise en contact de ce flux avec l'air comprimé.

En pratique, l'angle $\alpha$ peut-être d'environ 15°.

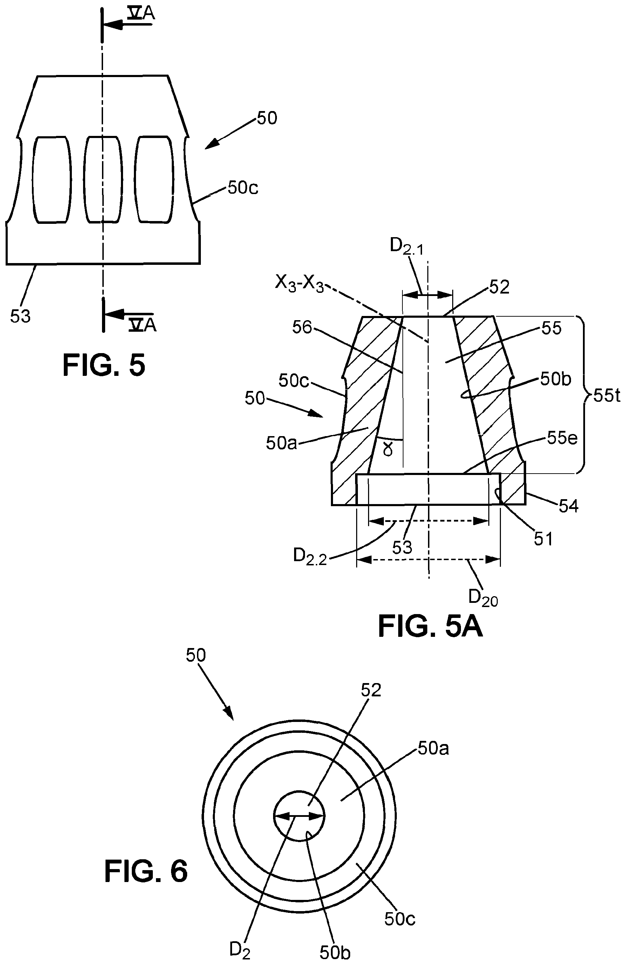

La buse (50) de projection est montrée sur les figures de 1, 3A, 4 et plus en détail sur les figures 5A et 6. Elle comprend une enveloppe (50a) qui présente une face externe (50c), une face interne (50b), une entrée (53) dont la plus grande dimension intérieure en section transversale droite est D20 et une ouverture terminale (52) dont la plus grande dimension intérieure en section transversale droite est D2.1; la face interne (50b), l'entrée (53) et l'ouverture terminale (52) définissant la lumière (55) de la buse (50).

La lumière (55) comporte un segment terminal (55t) s'étendant de l'ouverture terminale (52) en direction de l'entrée (53);

La plus grande dimension intérieure en section transversale droite du segment terminal (55e) croit, de manière continue, depuis la valeur D2.1 de l'ouverture terminale (52) formant l'une des extrémités du segment terminal (55t) jusqu'à la valeur D2.2 de l'autre extrémité (55e) du segment terminal (55t).

Dans le mode de réalisation donné à titre d'exemple sur les dessins, la section transversale droite de l'ouverture terminale (52), du segment terminal (55e) et l'entrée (53), est circulaire, de sorte que le segment terminal (55t) est tronconique.

D2.1 est le diamètre de l'ouverture de sortie 52 formant l'une des extrémités (extrémité de sortie). D2.1 est, par exemple, égal à environ 16 mm.

D2.2 est le diamètre de l'extrémité 55e (extrémité interne) du segment terminal 55t. D2.1 est par exemple égal à 40 mm.

D20 est le diamètre de l'entrée 53 de la buse 50. D20 est par exemple égal à 50 mm.

L'extrémité 55e (extrémité interne) du segment terminal 55t est aboutée avec l'ouverture de sortie 7 du corps 2 de lance 1..

Le diamètre D2.2 de l'extrémité 55e correspond sensiblement au diamètre de cette ouverture de sortie 7 qui est égal au diamètre intérieur D1 du conduit de guidage 6 du corps 2 de lance 1.

Cette configuration évite le colmatage de la lance par le mortier humide spécifique selon invention, que cette lance 1 permet de projeter.

La buse de projection 50, a une forme générale tronconique. Elle est en général constituée de caoutchouc et présente une ouverture terminale 52 circulaire de diamètre intérieur minimum D2 et une entrée 53 circulaire de diamètre intérieur minimum D20 > D2.

Suivant une caractéristique remarquable de l'invention, le diamètre intérieur minimum D20 de l'entrée 53 de la buse 50, est égal au diamètre intérieur minimum D1 du conduit 6 de guidage.

Cette entrée 53 s'étend vers l'intérieur de la buse 50 pour former une bague 54 comprenant un filetage intérieur 51 destiné à permettre le vissage de la buse 50 sur la partie terminale filetée 33 du segment S2 du corps 2 de lance 1.

La lumière 55 de la buse 50 entre cette bague 54 et l'ouverture terminale 52 est tronconique.

On considère l'angle intérieur $\gamma$ (voir figure 5A) défini entre la paroi inclinée de cette lumière tronconique 55 et la droite 56 tangente à la périphérie de l'ouverture terminale 52 et parallèle à l'axe X3-X3 de la buse 50.

Cet angle intérieur $\gamma$ est par exemple d'environ 15°.

→ Tuyau 30 d:amenée du flux de mortier humide :

L'entrée 3 du corps 2 de lance 1 est destinée à être reliée au tuyau 30 d'amenée du flux de mortier humide, par l'intermédiaire d'un embout de connexion 60 dont les 2 zones d'extrémité présente chacune un filetage intérieur propre à être vissé, respectivement, d'une part, sur la partie terminale 31 filetée du segment S1 du corps 2 de lance 1, et, d'autre part, sur l'une des extrémités du tuyau 30 d'amenée du flux de mortier humide.

Ce tuyau 30 présent un diamètre intérieur minimum D3 tel que D1 = D3 +/- 10% ainsi. Ainsi, dans cet exemple de réalisation, D3 = 36-44 mm.

En outre, l'embout 60 présente quant à lui un diamètre intérieur minimum D4 tel que D1 = D4 +/- 10% ainsi. Ainsi, dans cet exemple de réalisation, D4 = 36-44 mm.

L'autre extrémité du tuyau 30 d'amenée du flux de mortier humide est reliée à la pompe à vis 100, elle-même à la sortie du mélangeur 200 permettant la préparation du mortier humide.

→ Pompe à vis 100/mélangeur 200 :

La pompe ici considérée est une "pompe à vis", de préférence

> · du type de celles utilisées pour la projection des enduits de façade (telles que Lancy PHB-R, Bunker S8 Smart, Urban Volta, Spritz S28R, Spritz S38, Turbosol UNI30, Putzmeister SP11, S5 ou SP5);
> ·ou les pompes à béton (type Bunker B100).

La pompe à vis 100 est en fait une jaquette disposée en sortie du mélangeur 200 montré sur la figure 1A.

La demande de brevet WO97/45461A1 décrit un exemple de ce type de "pompe à vis". Cette dernière comprend généralement une chambre de succion et un port de décharge disposés respectivement aux extrémités d'un stator, à l'intérieur duquel est disposé un rotor hélicoïdal à simple hélice destiné à coopérer avec un stator à double hélice. Le stator est de préférence constitué par un matériau élastomère, tandis que le rotor 18 est avantageusement métallique. Ce dernier est mobile en rotation autour de son axe par l'intermédiaire de moyens d'entraînement et de transmission appropriés. Les brevets US N°2512764 et N°2612845 sont des exemples parmi d'autres, de sources d'informations sur la structure détaillée de ces pompes à vis.

La pompe à vis 100 représentée par la coupe schématique incluse dans la figure 1, comprend un tube de stator 101, un stator 102 traversé par un alésage 103 dans lequel est mobile en rotation un rotor 104. Ce tube stator 102/rotor 104 présente une extrémité de succion 105 et une extrémité de décharge ou port de décharge 106. Dès lors que le rotor 104 tourne à l'intérieur de l'alésage 103 du stator 102, des cavités 107 sont formées entre le rotor 104 et le stator 102. Ces cavités 107 progressent depuis l'extrémité de succion 105 jusqu'à l'extrémité ou port de décharge 106. Les cavités 107 ont une longueur définie par le pas de l'hélice du rotor 104 et par une hauteur maximale ou entrefer. Cet entrefer E peut par exemple varier entre 1 et 50 mm, de préférence 4 à 30 mm.

Cet ensemble "tube de stator 101/ stator 102 / rotor 104" est également dénommé jaquette.

Les jaquettes/stators couramment montés sur les machines à projeter les enduits de façade sont, par exemple, de type "2L6" ou 2R6 ou de type 2R8 (compatible avec la pompe à béton Bunker® B100).

A titre d'exemples de machines de projection dite "de façadier" comportant une pompe à vis et propres à être associées dans le dispositif selon l'invention à la lance de projection conforme à l'invention, on peut citer notamment : la machine de projection est avantageusement :

> · une machine de type S5, SP5, SP11 de Putzmeister, avec une pompe à vis équipée d'un rotor-stator de type 2L6 ou 2R6 ;
> · une machine de type S8, S28R, S38 de Bunker, avec une pompe à vis équipée d'un rotor-stator de type 2L6 ou 2R6 ;
> · une machine de type PH9B ou PH9B-Rde Lancy, avec une pompe à vis équipée d'un rotor-stator de type 2L6 ou 2R6 ;
> · une machine de type Talent DMR de Turbosol, avec une pompe à vis équipée d'un rotor-stator de type 2L6 ou 2R6 ;
> · une machine de projection de type B100 et CL18 de Bunker, avec une pompe à vis équipée d'un rotor-stator de type 2L8 ou 2R8 ;
> · une machine de projection de type SP20 de Putzmeister, avec une pompe à vis équipée d'un rotor-stator de type 2L8 ou 2R8 ;
> · une machine de projection de type TB20 de Lancy, avec une pompe à vis équipée d'un rotor-stator de type 2L8 ou 2R8 ;
> · ou une machine de projection de type Silant 300 CL de Turbosol, avec une pompe à vis équipée d'un rotor-stator de type 2L8 ou 2R8.

→ Canalisation 45 d'alimentation / compresseur 110 :

L'injecteur 40 est connecté par un raccord approprié à la canalisation 45 d'alimentation en fluide de projection, en l'espèce l'air comprimé. Ce dernier provient du compresseur 110 qui est du type de ceux connus en eux-mêmes et appropriés.

**Exemples de mise en oeuvre du procédé de projection avec un dispositif comprenant la lance de projection selon l'invention**

1.1 Composition des mortiers biosourcés projetés

Composition du mortier biosourcé « Bio-ChF »:

- 20 Kg de liant spécifique 1,
- 100 l de chènevotte fine (granulométrie <10mm)
- 50 l d'eau.

Composition du mortier biosourcé « Bio-ChG »:

- 25 Kg de liant spécifique 1,
- 100 l de chènevotte label bâtiment (granulométrie 10-30 mm)
- 50 l d'eau.

Composition du mortier biosourcé « Bio-Ma »:

- 12 Kg de liant spécifique 2,
- 100 l de moelle de maïs (granulométrie <15mm)
- 37 l d'eau.

| Composition des liants spécifiques | | Liant spécifique 1 | Liant spécifique 2 |
|---|---|---|---|
| L.1 Liant minéral primaire | Chaux calcique CL 90 et/ou hydraulique HL ou NHL suivant EN459-1 | 36,22% | 20,38% |
| | Source d'alumine telle que CAC suivant EN14647 | 7,5% | 18,5% |
| | Source de sulfate de calcium : anhydrite | 2,5% | 7% |
| L.2 Rétenteur d'eau | Ether cellulosique de type MHEC deviscosité 40 000 cps | 1,5% | 1,85% |
| L.3 Surfactant | Lauryl sulfate de sodium | 0,08% | 0,07% |
| L.4 Liant secondaire | Ciment portland artificiel type CEMI 52,5 | 15% | 18% |
| L.5 Charge minérale lubrifiante | Fumée de silice | 10% | 7% |
| L.6 Charge minérale d'espacement | Sable Siliceux 100 - 400 $\mu$m | 26,2% | 26% |
| L.7 Adjuvant hydrofuge | Sels métalliques d'acide gras | 0,3% | 0,3% |
| L.8 Adjuvant retardateur de prise | Citrate trisodique | 0% | 0,3% |
| L.9 Adjuvant accélérateur de prise | Carbonate de sodium | 0% | 0,1% |
| L.10 Adjuvant Epaississant | Epaississant minéral de type sépiolite | 0,7% | 0,5% |

1 .2 Préparation des mortiers biosourcés :

*e. 1 Préparation d'un mortier humide par mélange d'eau avec au moins un liant.*

Le malaxage du mortier est réalisé dans la cuve de la machine lorsque cette dernière en possède une ou en bétonnière suivant le descriptif suivant, préférentiellement :

-a- malaxage de 100 l de la charge avec l'eau de gâchage (totalité de l'eau diminuée de 2l environ) pendant 1 mn au moins.

-b- Introduction de la totalité du liant puis malaxage pendant 5 mn environ avec ajustement de la viscosité par ajout éventuel d'eau. La viscosité obtenue du mortier doit permettre un bon écoulement dans la cuve de pompage (mortier se plaçant sous son propre poids à l'horizontal) tout en maintenant un seuil permettant une tenue en charge de 5 cm.

-c- Transfert de la gâchée dans la cuve de la pompe à vis.

*e.2 Projection de ce mortier humide à l'aide du dispositif selon l'invention décrit ci-dessus, la pression du jet de mortier humide en sortie de buse (50) étant de l'ordre de 15 bars.*

Pour la projection, la lance 1 de projection est alimentée en air comprimé à une pression de 6 à 8 bars.

Les autres conditions de mise en oeuvre de la projection sont indiquées dans le tableau donné ci-dessous en rubrique 1.3.

1.3 Mise en œuvre des mortiers biosourcés

| N° Essai | Mortier biosourcé | Type de jaquette | Passage dans la jaquette* | Type de tuyaux | Passage dans les tuyaux* | Type de lance | Passage dans la lance* | Débit en sortie de lance (s/10l) | Tenu en charge du mortier (cm) | Pression de rupture de la |
|---|---|---|---|---|---|---|---|---|---|---|
| 1 | « Bio-ChF » | 2L6 | 0 | *Pas de passage* | | | | | | |
| 2 | « Bio-ChF » | 1,5L63 | 2 | Standard | 1 | standard | 0/1 | 60 | 3 | 160 |
| 3 | « Bio-ChF » | 1,5L63 | 2 | Passage intégral | 2 | standard | 0/1 | 45 | 3 | 140 |
| 4 | « Bio-ChF» | 1,5L63 | 2 | Passage intégral | 2 | Lance développée | 2 | 30 | 3 | 120 |
| 5 | « Bio-ChG » | 1,5L63 | 0 | *Pas de passage* | | | | | | |
| 6 | « Bio-Ma » | 2L6 | 2 | Standard | 1 | standard | 0/1 | 45 | 2 | 150 |
| 7 | « Bio-Ma » | 1,5L63 | 2 | Standard | 1 | standard | 0/1 | 40 | 5 | 140 |
| 8 | « Bio-Ma » | 1,5L63 | 2 | Passage intégral | 2 | standard | 1 | 35 | 5 à 8 | 120 |
| 9 | « Bio-Ma » | 1,5L63 | 2 | Passage intégral | 2 | Lance développée | 2 | 25 | 5 à 8 | 120 |

\* Aptitude au procédé :

0 : Mauvais

1 : Moyen

2 : Bon

## Revendications

1. Procédé de projection d'un mortier humide destiné à durcir pour former un élément de construction, ledit procédé comprenant les étapes suivantes :

e.1. préparation d'un mortier humide par mélange d'eau avec au moins liant comportant des particules dont la D50 est inférieure ou égale à 150 $\mu$m, de préférence à 100 $\mu$m, avec des granulats, éventuellement avec des charges, et éventuellement avec au moins un additif ;

- au moins une partie de ces granulats ayant :

. une granulométrie D50, comprise entre 1 et 15 mm, de préférence entre 3 et 6 mm ;
. un facteur de forme F défini comme étant le rapport de la plus grande dimension d'un granulat sur sa plus petite dimension, tel que F différent de 1

e.2. projection de ce mortier humide à l'aide d'un dispositif de projection d'un mortier humide comprenant

- au moins une pompe (100) de mise en circulation du mortier humide ;
- éventuellement au moins une source (110) de fluide de projection, de préférence de l'air comprimé ;
- et au moins une lance (1) de projection;

la pression du jet de mortier humide en sortie de buse (50) étant de préférence comprise entre 5 et 30 bars, plus préférentiellement entre 8et 25 bars et plus préférentiellement encore, entre 10 et 20 bars, idéalement de l'ordre de 15 bars, **caractérisé en ce que** la lance (1) de projection comprenant :

• un corps (2) de lance (1) présentant :

--+ au moins une entrée (3) d'un flux de mortier humide destinée à être connectée avec un conduit (30) d'amenée de ce flux de mortier humide ;
--+ au moins une ouverture (4) d'injection d'un jet de fluide de projection, de préférence de l'air comprimé ;
--+ et au moins une chambre (5) de mise en contact du jet de fluide de projection avec le flux de mortier humide ;
--+ au moins un conduit (6) de guidage du flux de mortier humide de l'entrée (3) du corps (2) de lance (1) jusqu'à la chambre (5) de mise en contact ;
--+ au moins une sortie (7) de mortier humide projeté ;

. au moins un injecteur (40) monté sur l'ouverture (4) d'injection et comprenant au moins une tête (41) débouchant dans la chambre (5) de mise en contact, cet injecteur (40) étant apte à produire un jet de fluide de projection en direction de la sortie du corps (2) de lance (1); ledit injecteur (40) étant destiné à être connecté à une canalisation (41) d'alimentation en fluide de projection ;
. au moins une buse (50) de projection du mortier, destinée à être montée sur la sortie (7) du corps (2) de lance (1) ;
· de préférence, au moins un embout (60) de connexion monté sur l'entrée (3) du corps (2) de lance (1) prévue pour l'admission du flux de mortier humide ;

et **caractérisé en ce que**

**a.** le conduit (6) de guidage est conçu de telle sorte que le flux de mortier humide au sein de ce conduit (6) est monodirectionnel ou pluridirectionnel, avec la condition selon laquelle tout changement de direction du flux correspond à un écart angulaire ED inférieur ou égal à 30°, de préférence à 20°, et plus préférentiellement encore à 10° ;
**b.** la position de la tête (41) d'injection de l'injecteur (40) dans la chambre (5) de mise en contact est réglable,

et **caractérisé en ce que**

- le conduit (6) de guidage a un diamètre intérieur minimum D1 ;
- la buse (50) de projection du mortier présente une ouverture terminale de diamètre intérieur minimum D2 ;
- et D1/D2 $\geq$ 1,et **caractérisé en ce que**
- l'entrée du corps (2) de lance (1) prévue pour l'admission du flux de mortier humide, est destinée à être reliée à un tuyau d'amenée du flux de mortier humide, de diamètre intérieur minimum D3 ;
- et D1 = D3 +/- 10%,

et **caractérisé en ce que** la pompe (100) de mise en circulation du mortier humide est choisie parmi les pompes à vis excentrées présentant les caractéristiques suivantes :

**P.2** jaquette de pompage avec une longueur L comprise entre 20 et 80, de préférence entre 30 et 60 centimètres ;
**P.3** jaquette de pompage avec un nombre de pas de vis égal à 3 ou à 4.

2. Procédé selon la revendication 1 selon lequel

*(i).* la buse (50) de projection comprend une enveloppe (50a) qui présente une face externe (50c) , une face interne (50b), une entrée (53) dont la plus grande dimension intérieure en section transversale droite est D20 et une ouverture terminale (52) dont la plus grande dimension intérieure en section transversale droite est D2.1; la face interne (50b), l'entrée (53) et l'ouverture terminale (52) définissant la lumière (55) de la buse (50);

*(ii).* la lumière (55) comporte un segment terminal (55t) s'étendant de l'ouverture terminale (52) en direction de l'entrée (53);

*(iii).* la plus grande dimension intérieure en section transversale droite du segment terminal (55e) croit, de manière continue, depuis la valeur D2.1 de l'ouverture terminale (52) formant l'une des extrémités du segment terminal (55t) jusqu'à la valeur D2.2 de l'autre extrémité (55e) du segment terminal (55t).

3. Procédé selon la revendication 2 selon lequel la section transversale droite de l'ouverture terminale (52), du segment terminal (55e), et, de préférence de l'entrée (53), est circulaire, de sorte que le segment terminal (55e) est tronconique.

4. Procédé selon l'une au moins des revendications précédentes selon lequel le conduit (6) de guidage est conçu de telle sorte que le flux de mortier humide soit monodirectionnel et en ce que l'angle $\alpha$ entre la direction du flux de mortier humide et la direction du jet de fluide de projection, est tel que :
$\alpha \leq 45°$; de préférence $\alpha \leq 40°$, et, plus préférentiellement encore $\alpha \leq 35°$.

5. Procédé selon la revendication 1 selon lequel :

· $20 \leq D1$ (en mm) $\leq 60$; de préférence $25 \leq D1$ (en mm) $\leq 55$; et, plus préférentiellement encore $30 \leq D1$ (en mm) $\leq 50$ ;
· $10 \leq D2$ (en mm) $\leq 25$; de préférence $13 \leq D2$ (en mm) $\leq 20$; et, plus préférentiellement encore $15 \leq D2$ (en mm) $\leq 18$.

6. Procédé selon l'une au moins des revendications précédentes selon lequel

la buse (50) de projection a une forme tronconique ;
et en ce que l'angle intérieur $\gamma$ de cette buse (50) est compris entre 5 et 30°, de préférence entre 10 et 25°, et, plus préférentiellement encore, entre 10 et 20°.

7. Procédé selon l'une au moins des revendications précédentes selon lequel

elle comporte au moins un embout (60) de connexion monté sur l'entrée (3) du corps (2) de lance (1) prévue pour l'admission du flux de mortier humide ;
cet embout (60) a un diamètre intérieur minimum D4 ;
cet embout (60) est destiné à être relié à un tuyau (30) d'amenée du flux de mortier humide, de diamètre intérieur minimum D3 ;
et D3 = D4 +/- 10%.

8. Procédé selon l'une au moins des revendications précédentes selon lequel

l'injecteur (40) est un tube sensiblement coaxial à la direction X2-X2 de projection ;
ce tube (40) est enchâssé à l'intérieur du corps (2) de lance (1) au travers de l'ouverture (4) d'injection ;
ce tube (40) peut coulisser en translation par rapport à l'ouverture ;
le mouvement de translation de ce tube (40) par rapport à l'ouverture (4) peut être bloqué à différentes positions.

9. Procédé selon l'une au moins des revendications précédentes selon lequel les granulats sont choisis dans le groupe comprenant - idéalement constitué par - :

(i) les charges biosourcées, de préférence d'origine végétale, plus préférentiellement, les charges biosourcées d'origine végétale composées de cellulose, de cellulose et/ou de lignine; et, plus préférentiellement encore, celles choisies dans le sous-groupe comprenant - mieux encore constitué par - chanvre, lin, paille de céréale, avoine, riz, colza, maïs, sorgho, lin, miscanthus, balle de riz, canne à sucre, tournesol, kénaf, noix de coco, noyaux d'olive, bambou, bois, typha ou leurs mélanges ;
ces charges biosourcées d'origine végétale se présentant avantageusement sous au moins une forme particulaire, de préférence choisies parmi les fibres, les moelles notamment les moelles de tournesol, de maïs, de colza, des fibrilles, des poussières, les poudres, les copeaux et leurs mélanges ;
(ii) les charges minérales naturelles, de préférence celles choisies dans le sous-groupe comprenant - mieux encore constitué par - pierres ponces, roches volcaniques, déchets de carrières, granulats issus de terres agricoles, granulats de sédiments marins et fluviaux ;

(iii) les charges minérales synthétiques, de préférence celles choisies dans le sous-groupe comprenant - mieux encore constitué par - les vermiculites, les perlites, les billes de verre creuses, les déchets ou retours de production, de l'industrie céramique, telles que terres ou argiles crues, cuites ou fondues porcelaine, abrasifs électrofondus ou frittés, support de cuisson, xérogel de silice, verres, ou vitrocéramiques - ;

(iv) les charges non minérales synthétiques, de préférence celles choisies dans le sous-groupe comprenant - mieux encore constitué par -les plastiques thermoplastiques, thermodurcissables ou dérivés d'élastomères, chargés ou non de fillers minéraux tels que pare-chocs de voiture, polymères renforcés de fibres de verre ou de carbone, mieux encore constituées par les déchets des charges non minérales synthétiques précitées difficilement recyclables dans l'industrie plastique ;

(v) les charges issues de co-produits ou sous-produits industriels, de préférence celles choisies dans le sous-groupe comprenant -mieux encore constitué par- les laitiers, crasses ou scories des procédés de métallurgie primaire ou secondaire ; avantageusement les laitiers d'unités de fusion telles que cubilot, four à induction, four à arc ou haut-fourneaux ; de poches de traitement, de transfert, de maintien ou de coulée, de convertisseurs, d'unités de décarburation ou désulfurisation, d'unité de coulée continue ;

(vi) les sables minéraux utilisés pour le sablage, grenaillage ou nettoyage par projection sous pression ;

(vii) les granulats de déconstruction d'ouvrages de génie civil ou du bâtiment, à dominante minérale, de préférence choisies dans le sous-groupe comprenant - mieux encore constitué par - les déchets de bétons, de bétons cellulaires, de mortiers, de briques, de pierre naturelles, d'enrobés, de tuiles, de carrelages, de ferrailles, de mâchefer et leurs mélanges ;

(viii) les granulats de déconstruction d'ouvrages de génie civil ou du bâtiment à dominante organo-minérale ou organique, de préférence les matériaux composites, les matériaux isolants recyclés, avantageusement choisi dans le groupe comprenant - idéalement constitué par- les polystyrènes, les polyuréthanes, les résines phénoliques, les matériaux isolants en bois, et leurs mélanges ;

(ix) les mélanges de granulats (viii) avec des matrices minérales ;

(x) les granulats de déconstruction de garnissages réfractaires, de préférence celles choisies dans le sous-groupe comprenant - mieux encore constitué par - les granulats issus de la démolition de réfractaires monolithiques mise en place par damage, coulage projection, de réfractaires constitués de briques ou de réfractaires issus de pièces de forme telles que filtres, busettes de coulées, plaques à tiroirs, bouchons poreux ;

(xi) les plastiques non recyclables tels que les granulats de textiles usagés, les plastiques chargés (fibres de verre ou autres charges minérales), avantageusement, les plastiques constituant les pare-chocs automobiles, les revêtements de sol du type linoléum ;

(xii) les matériaux granulaires non dangereux habituellement destinés à l'enfouissement, les sables de fonderies usagés, les supports de catalyseurs, les supports de traitement de de-soding du procédé Bayer, les granulats de mâchefer, les charges issues notamment du traitement des boues d'excavation, des boues d'épuration, des lisiers, des déchets papetiers, des cendres d'incinération papetières, des cendres d'incinération des ordures ménagères ; ces charges (i) à (xii) se présentant avantageusement sous au moins une forme particulaire, et étant de préférence choisies parmi les poussières, les poudres, les copeaux et leurs mélanges ;

(xiii) et leurs mélanges.

10. Procédé selon la revendication 1 selon lequel la pompe (100) de mise en circulation du mortier humide est choisie parmi les pompes à vis excentrées présentant au moins l'une des caractéristiques suivantes :

**P.1** jaquette de pompage avec un entrefer (E) entre rotor (104) et stator (102) compris entre 4 et 30 mm, de préférence entre 6 et 10 mm ;

**P.4** jaquette de pompage avec un stator (102) en élastomère de dureté Shore comprise entre 30 et 60, de préférence entre 35 et 50, et plus préférentiellement encore de l'ordre de 43 ;

**P.5** une pression de rupture inférieure ou égale à 150 bars, de préférence comprise entre 100 et 120 bars ;

**P.6** une pression de service pour le flux de mortier humide comprise entre 10 et 30 bars, de préférence entre 15 et 20 bars.

11. Procédé selon la revendication 1 ou la revendication 10 comprenant au moins l'un des éléments supplémentaires suivants :

au moins une source (200) de mortier humide ;
au moins un compresseur (110) du fluide de projection ;
au moins un conduit (30) d'amenée du flux de mortier humide ;

au moins une canalisation (45) d'alimentation en fluide de projection.

**12.** Procédé selon la revendication 1 selon lequel l'élément de construction en mortier durci est choisi dans le groupe comprenant - idéalement constitué par - un enduit de façade intérieur ou extérieur, un ragréage et/ou un ravoirage de sols, un remplissage de combles, un remplissage de coffrage de bâtiment à ossature, un élément de préfabrication, un mortier d'isolation technique et/ou phonique.

## Patentansprüche

**1.** Verfahren zum Spritzen eines Nassmörtels, der aushärten soll und so ein Bauteil bildet, wobei das Verfahren folgende Schritte umfasst:

e.1. Herstellen eines Nassmörtels durch Mischen von Wasser mit mindestens einem Bindemittel, das Teilchen aufweist, deren D50 kleiner gleich 150 $\mu$m, vorzugsweise 100 $\mu$m, beträgt, mit Zuschlagstoffen, gegebenenfalls mit Füllstoffen und gegebenenfalls mit mindestens einem Zusatzstoff;

- wobei mindestens ein Anteil dieser Zuschlagstoffe Folgendes aufweist:

. einen D50-Wert zwischen 1 und 15 mm, vorzugsweise zwischen 3 und 6 mm;
. einen als Verhältnis der größten Abmessung eines Zuschlagstoffs zu seiner kleinsten Abmessung definierten Formfaktor F ungleich 1;

e.2. Spritzen dieses Nassmörtels mithilfe einer Spritzvorrichtung für einen Nassmörtel, die Folgendes umfasst:

- mindestens eine Pumpe (100) zum Umwälzen des Nassmörtels;
- gegebenenfalls mindestens eine Quelle (110) für Spritzfluid, vorzugsweise Druckluft;
- und mindestens eine Spritzpistole (1);

wobei der Druck des Nassmörtelstrahls am Austritt der Düse (50) vorzugsweise zwischen 5 und 30 Bar liegt, bevorzugter zwischen 8 und 25 Bar und noch bevorzugter zwischen 10 und 20 Bar, idealerweise in der Größenordnung von 15 Bar,
**dadurch gekennzeichnet, dass** die Spritzpistole (1) Folgendes umfasst:

. einen Hauptteil (2) der Pistole (1), der Folgendes aufweist:

➢ mindestens eine Einströmöffnung (3) für einen Nassmörtelstrom, die mit einer Zuleitung (30) für diesen Nassmörtelstrom verbunden werden soll;
➢ mindestens eine Öffnung (4) zum Einleiten eines Strahls Spritzfluid, vorzugsweise Druckluft;
➢ und mindestens eine Kammer (5) zum Inkontaktbringen des Spritzfluidstrahls mit dem Nassmörtelstrom;
➢ mindestens eine Leitung (6) zum Führen des Nassmörtelstroms von der Einströmöffnung (3) des Hauptteils (2) der Pistole (1) zur Kontaktierungskammer (5);
➢ mindestens eine Ausströmöffnung (7) für den gespritzten Nassmörtel;

. mindestens einen Injektor (40), der an der Einleitöffnung (4) angebracht ist und mindestens einen Kopf (41) umfasst, der in die Kontaktierungskammer (5) mündet, wobei dieser Injektor (40) in der Lage ist, einen Strahl Spritzfluid in Richtung der Ausströmöffnung des Hauptteils (2) der Pistole (1) zu erzeugen; wobei der Injektor (40) mit einer Zuleitung (41) für Spritzfluid verbunden werden soll;
. mindestens eine Düse (50) zum Spritzen von Mörtel, die an der Ausströmöffnung (7) des Hauptteils (2) der Pistole (1) angebracht werden soll;
. vorzugsweise mindestens einen Verbindungsstutzen (60), der an der Einströmöffnung (3) des Hauptteils (2) der Pistole (1) angebracht ist, die für die Zuleitung des Nassmörtelstroms vorgesehen ist;

und **dadurch gekennzeichnet, dass**

a. die Führungsleitung (6) derart ausgestaltet ist, dass der Nassmörtelstrom in dieser Leitung (6) unidirektional oder mehrdirektional ist, unter der Bedingung, dass jede Änderung der Fließrichtung einem Winkelabstand ED von kleiner gleich 30°, vorzugsweise kleiner gleich 20° und noch bevorzugter kleiner gleich 10° entspricht;

b. die Position des Kopfs (41) zum Einleiten des Injektors (40) in der Kontaktierungskammer (5) einstellbar ist,

und **dadurch gekennzeichnet, dass**

- die Führungsleitung (6) einen Mindestinnendurchmesser D1 aufweist;
- die Düse (50) zum Spritzen des Mörtels eine Endöffnung mit einem Mindestinnendurchmesser D2 aufweist;
- und D1/D2 ≥ 1, und **dadurch gekennzeichnet, dass**
- die Einströmöffnung des Hauptteils (2) der Pistole (1), die zum Zuleiten des Nassmörtelstroms vorgesehen ist, mit einem Schlauch zur Zuleitung für den Nassmörtelstrom mit einem Mindestinnendurchmesser D3 verbunden ist;
- und D1 = D3 +/- 10%,

und **dadurch gekennzeichnet, dass** die Pumpe (100) zum Umwälzen des Nassmörtels aus Exzenterschneckenpumpen mit folgenden Eigenschaften ausgewählt ist:

P.2 Pumpenmantel mit einer Länge L zwischen 20 und 80, vorzugsweise zwischen 30 und 60 Zentimeter;
P.3 Pumpenmantel mit einer Steigungszahl von 3 oder 4.

2. Verfahren nach Anspruch 1, wobei

(i). die Düse (50) zum Spritzen eine Ummantelung (50a) umfasst, die eine Außenseite (50c), eine Innenseite (50b), eine Einströmöffnung (53), deren größte Innenabmessung im Querschnitt D20 ist, und eine Endöffnung (52) aufweist, deren größte Innenabmessung im Querschnitt D2.1 ist; wobei die Innenseite (50b), die Einströmöffnung (53) und die Endöffnung (52) den Kanal (55) der Düse (50) definieren;
(ii). der Kanal (55) ein Endsegment (55t) aufweist, das sich von der Endöffnung (52) aus in Richtung der Einströmöffnung (53) erstreckt;
(iii). die größte Innenabmessung im Querschnitt des Endsegments (55e) von dem Wert D2.1 der Endöffnung (52), die eins der Enden des Endsegments (55t) bildet, bis zum Wert D2.2 des anderen Endes (55e) des Endsegments (55t) kontinuierlich größer wird.

3. Verfahren nach Anspruch 2, wobei der Querschnitt der Endöffnung (52), des Endsegments (55e) und vorzugsweise der Einströmöffnung (53) derart kreisförmig ist, dass das Endsegment (55e) kegelstumpfförmig ist.

4. Verfahren nach mindestens einem der vorhergehenden Ansprüche, wobei die Führungsleitung (6) derart ausgestaltet ist, dass der Nassmörtelstrom unidirektional ist und dass der Winkel α zwischen der Strömungsrichtung des Nassmörtels und der Richtung des Spritzfluidstrahls derart ist, dass:
α ≤ 45°; vorzugsweise α ≤ 40° und noch bevorzugter α ≤ 35° .

5. Verfahren nach Anspruch 1, wobei:

• 20 ≤ D1 (in mm) ≤ 60; vorzugsweise 25 ≤ D1 (in mm) ≤ 55 und noch bevorzugter 30 ≤ D1 (in mm) ≤ 50;
• 10 ≤ D2 (in mm) ≤ 25; vorzugsweise 13 ≤ D2 (in mm) ≤ 20 und noch bevorzugter 15 ≤ D2 (in mm) ≤ 18.

6. Verfahren nach mindestens einem der vorhergehenden Ansprüche, wobei

• die Düse (50) zum Spritzen eine Kegelstumpfform aufweist;
• und dadurch, dass der Innenwinkel γ dieser Düse (50) zwischen 5 und 30°, vorzugsweise zwischen 10 und 25° und noch bevorzugter zwischen 10 und 20° liegt.

7. Verfahren nach mindestens einem der vorhergehenden Ansprüche, wobei

• sie mindestens einen Verbindungsstutzen (60) aufweist, der an der Einströmöffnung (3) des Hauptteils (2) der Pistole (1) angebracht ist, die für die Zuleitung des Nassmörtelstroms vorgesehen ist;
• dieser Stutzen (60) einen Mindestinnendurchmesser D4 aufweist;
• dieser Stutzen (60) mit einem Schlauch (30) zur Zuleitung für den Nassmörtelstrom mit dem Mindestinnendurchmesser D3 verbunden werden soll;

• und D3 = D4 +/- 10%.

8. Verfahren nach mindestens einem der vorhergehenden Ansprüche, wobei

    • der Injektor (40) eine Röhre ist, die im Wesentlichen koaxial zur Spritzrichtung X2-X2 verläuft;
    • diese Röhre (40) im Inneren des Hauptteils (2) der Pistole (1) durch die Einleitöffnung (4) hindurch eingesetzt ist;
    • diese Röhre (40) bezogen auf die Öffnung linear verschoben werden kann;
    • die Translationsbewegung dieser Röhre (40) bezogen auf die Öffnung (4) in verschiedenen Positionen blockiert werden kann.

9. Verfahren nach mindestens einem der vorhergehenden Ansprüche, wobei die Zuschlagstoffe aus der Gruppe ausgewählt sind, die Folgendes umfasst, idealerweise aus Folgendem besteht:

    (i). biobasierte Füllstoffe, vorzugsweise pflanzlicher Herkunft, bevorzugter biobasierte Füllstoffe pflanzlicher Herkunft, die aus Zellulose, Zellulose und/oder Lignin aufgebaut sind; und noch bevorzugter Füllstoffe, die aus der Untergruppe ausgewählt sind, die Folgendes umfasst, besonders bevorzugt aus Folgendem besteht: Hanf, Lein, Getreidestroh, Hafer, Reis, Raps, Mais, Sorghum, Lein, Miscanthus, Reishülsen, Zuckerrohr, Sonnenblumen, Kenaf, Kokosnuss, Olivenkerne, Bambus, Holz, Rohrkolben oder ihre Mischungen; wobei diese biobasierten Füllstoffe vorteilhafterweise in mindestens einer Partikelform vorliegen, vorzugsweise aus Fasern, Mark, insbesondere von Sonnenblumen, Mais und Raps, Fibrillen, Stäuben, Pulvern, Spänen und ihren Mischungen ausgewählt sind,
    (ii). natürliche mineralische Füllstoffe, vorzugsweise Füllstoffe, die aus der Untergruppe ausgewählt sind, die Folgendes umfasst, besonders bevorzugt aus Folgendem besteht: Bimsstein, Vulkangestein, Steinbruchabfälle, Zuschlagstoffe, die von landwirtschaftlichen Flächen stammen, Zuschlagstoffe aus Meeres- und Flusssedimenten;
    (iii). synthetische mineralische Füllstoffe, vorzugsweise Füllstoffe, die aus der Untergruppe ausgewählt sind, die Folgendes umfasst, besonders bevorzugt aus Folgendem besteht: Vermiculit, Perlit, Glashohlkugeln, Produktionsabfälle oder Rücklaufmaterial aus der Keramikindustrie wie rohe, gebrannte oder geschmolzene Erden oder Tone, Porzellan, elektrisch geschmolzene oder gesinterte Schleifmittel, Brennhilfsmittel, Kieselgel, Gläser oder Glaskeramiken;
    (iv). synthetische nichtmineralische Füllstoffe, vorzugsweise Füllstoffe, die aus der Untergruppe ausgewählt sind, die Folgendes umfasst, besonders bevorzugt aus Folgendem besteht: thermoplastische, duroplastische Kunststoffe oder Elastomerderivate, mit oder ohne mineralische Füllstoffe wie Stoßfänger von Autos, glasfaser- oder kohlefaserverstärkte Polymere, und besonders bevorzugt aus Abfällen vorgenannter synthetischer nichtmineralischer Füllstoffe besteht, die in der Kunststoffindustrie schwer recycelbar sind;
    (v). Füllstoffe aus Koprodukten oder Nebenprodukten der Industrie, vorzugsweise Füllstoffe, die aus der Untergruppe ausgewählt sind, die Folgendes umfasst, besonders bevorzugt aus Folgendem besteht: Krätzen oder Schlacken aus primären oder sekundären metallurgischen Prozessen; vorteilhafterweise Schlacken aus Schmelzanlagen wie Kupolöfen, Induktionsöfen, Lichtbogenöfen oder Hochöfen; aus Behandlungs-, Transport-, Halte- oder Gießpfannen, Konvertern, Entkohlungs- oder Entschwefelungsanlagen, Stranggießanlagen;
    (vi). Mineralsande, die zum Sandstrahlen, Kugelstrahlen oder für die Hochdruck-Spritzreinigung verwendet werden;
    (vii). Zuschlagstoffe aus dem Abbruch von Bauwerken aus Tief- und Hochbau, die vorrangig mineralisch sind und vorzugsweise aus der Untergruppe ausgewählt sind, die Folgendes umfasst, besonders bevorzugt aus Folgendem besteht: Abfälle von Beton, Porenbeton, Mörtel, Ziegeln, Naturstein, Asphalt, Dachziegeln, Fliesen, Schrott, Schlacke und ihre Mischungen;
    (viii). Zuschlagstoffe aus dem Abbruch von Bauwerken aus Tief- und Hochbau, die vorrangig organisch-mineralisch oder organisch sind, vorzugsweise Verbundmaterialien, recycelte Dämmstoffe, die vorteilhafterweise aus der Gruppe ausgewählt sind, die Folgendes umfasst, idealerweise aus Folgendem besteht: Polystyrole, Polyurethane, Phenolharze, Dämmstoffe aus Holz und ihre Mischungen;
    (ix). Mischungen aus den Zuschlagstoffen (viii) mit mineralischen Matrixmaterialien;
    (x). Zuschlagstoffe aus der Demontage von feuerfesten Auskleidungen, vorzugsweise Zuschlagstoffe, die aus der Gruppe ausgewählt sind, die Folgendes umfasst, besonders bevorzugt aus Folgendem besteht: Zuschlagstoffe aus dem Abbruch von monolithischen Feuerfestmaterialien, die durch Stampfen, Gießen oder Spritzen aufgebracht werden, von aus Steinen bestehenden Feuerfestmaterialien oder von Feuerfestmaterialien, die aus Formstücken wie Filtern, Gießdüsen, Schieberplatten und porösen Stopfen stammen;
    (xi). nicht recyclingfähige Kunststoffe wie Zuschlagstoffe aus Alttextilien, Kunststoffe mit Füllstoffen (Glasfasern oder andere mineralische Füllstoffe), vorteilhafterweise Kunststoffe, aus denen Stoßfänger im Automobilbau bestehen, Linoleum als Fußbodenbelag;

(xii). ungefährliches körniges Material, das gewöhnlich zum Vergraben bestimmt ist, Gießerei-Restsande, Katalysatorträger, Träger für die Behandlung nach dem Bayer-Verfahren, Schlackenzuschlagstoffe, Füllstoffe, die insbesondere bei der Behandlung von Aushubschlamm, Klärschlamm, Gülle, Papierabfällen, Asche aus der Papierverbrennung, Asche aus der Hausmüllverbrennung anfallen;

wobei diese Füllstoffe (i) bis (xii) vorteilhafterweise in mindestens einer Partikelform vorliegen und bevorzugt aus Stäuben, Pulvern, Spänen und ihren Mischungen ausgewählt sind;

(xiii). und ihre Mischungen.

**10.** Verfahren nach Anspruch 1, wobei die Pumpe (100) zum Umwälzen des Nassmörtels aus Exzenterschneckenpumpen mit mindestens einer der folgenden Eigenschaften ausgewählt ist:

P.1 Pumpenmantel mit einem Spalt (E) zwischen Rotor (104) und Stator (102) zwischen 4 und 30 mm, vorzugsweise zwischen 6 und 10 mm;

P.4 Pumpenmantel mit einem Stator (102) aus einem Elastomer mit einer Shore-Härte zwischen 30 und 60, vorzugsweise zwischen 35 und 50 und noch bevorzugter in der Größenordnung von 43;

P.5 ein Berstdruck kleiner gleich 150 Bar, vorzugsweise zwischen 100 und 120 Bar;

P.6 ein Betriebsdruck für den Nassmörtelstrom zwischen 10 und 30 Bar, vorzugsweise zwischen 15 und 20 Bar.

**11.** Verfahren nach Anspruch 1 oder Anspruch 10, das mindestens eins der folgenden zusätzlichen Elemente umfasst:

• mindestens eine Quelle (200) für den Nassmörtel;
• mindestens einen Verdichter (110) für das Spritzfluid;
• mindestens eine Zuleitung (30) für den Nassmörtelstrom;
• mindestens eine Zuleitung (45) für das Spritzfluid.

**12.** Verfahren nach Anspruch 1, wobei das Bauteil aus ausgehärtetem Mörtel aus der Gruppe ausgewählt ist, die Folgendes umfasst, idealerweise aus Folgendem besteht: einen Innen- oder Außenfassadenputz, eine Spachtelmasse und/oder Bodenausgleichsmasse, eine Dachbodenfüllung, eine Schalungsfüllung für einen Skelettbau, ein Fertigbauteil, einen Mörtel zur technischen Isolierung und/oder Schalldämmung.

**Claims**

**1.** Method for spraying a wet mortar intended to harden to form a construction element, said method comprising the following stages:

e.1. preparation of a wet mortar by mixing water with at least one binder comprising particles the D50 of which is less than or equal to 150 $\mu$m, preferably less than or equal to 100 $\mu$m, with aggregates, optionally with fillers and optionally with at least one additive;

- at least a part of these aggregates having:

. a particle size D50 of between 1 and 15 mm, preferably between 3 and 6 mm;
. a form factor F defined as being the ratio of the largest dimension of an aggregate to its smallest dimension, such that F is different from 1;

e.2. spraying of this wet mortar using a device for spraying a wet mortar comprising:

- at least one pump (100) for circulating the wet mortar;
- optionally at least one source (110) of spray fluid, preferably compressed air;
- and at least one spray gun (1);

the pressure of the jet of wet mortar at the nozzle (50) outlet preferably being between 5 and 30 bar, more preferentially between 8 and 25 bar and more preferentially still between 10 and 20 bar, ideally of the order of 15 bar,

**characterized in that** the spray gun (1) comprises:

• a gun (1) body (2) exhibiting:

→ at least one inlet (3) for a flow of wet mortar intended to be connected to a supply duct (30) for this flow of wet mortar;
at least one opening (4) for injection of a jet of spray fluid, preferably compressed air;
→ and at least one chamber (5) for bringing the jet of spray fluid into contact with the flow of wet mortar;
→ at least one duct (6) for guiding the flow of wet mortar from the inlet (3) of the gun (1) body (2) up to the contacting chamber (5);
→ at least one outlet (7) for sprayed wet mortar;

• at least one injector (40) mounted on the injection opening (4) and comprising at least one head (41) emerging in the contacting chamber (5), this injector (40) being capable of producing a jet of spray fluid in the direction of the outlet of the gun (1) body (2); said injector (40) being intended to be connected to a pipe (41) for feeding with spray fluid;
• at least one spray nozzle (50) for the mortar, intended to be mounted on the outlet (7) of the gun (1) body (2);
• preferably, at least one connection end piece (60) mounted on the inlet (3) of the gun (1) body (2) provided for the admission of the flow of wet mortar;

and **characterized in that**

a. the guiding duct (6) is designed so that the flow of wet mortar within this duct (6) is monodirectional or multidirectional, with the condition according to which any change in the direction of the flow corresponds to an angular deviation ED of less than or equal to 30°, preferably of less than or equal to 20° and more preferentially still of less than or equal to 10°;
b. the position of the injection head (41) of the injector (40) in the contacting chamber (5) is adjustable;

and **characterized in that**:

- the guiding duct (6) has a minimum internal diameter D1;
- the spray nozzle (50) for the mortar exhibits a terminal opening with a minimum internal diameter D2;
- and D1/D2 $\geq$ 1, and **characterized in that**:
- the inlet of the gun (1) body (2) provided for the admission of the flow of wet mortar is intended to be connected to a supply hose for the flow of wet mortar, with a minimum internal diameter D3;
- and D1 = D3 +/- 10%,

and **characterized in that** the pump (100) for circulating the wet mortar is chosen from eccentric screw pumps exhibiting the following characteristics:

P.2. pumping jacket with a length L of between 20 and 80, preferably between 30 and 60, centimetres;
P.3. pumping jacket with a number of screw pitches equal to 3 or to 4.

2. Method according to Claim 1, according to which:

(i). the spray nozzle (50) comprises a casing (50a) which exhibits an outer face (50c), an inner face (50b), an inlet (53) the largest internal dimension of which in straight cross section is D20, and a terminal opening (52) the largest internal dimension of which in straight cross section is D2.1; the inner face (50b), the inlet (53) and the terminal opening (52) defining the aperture (55) of the nozzle (50);
(ii). the aperture (55) comprises a terminal segment (55t) extending from the terminal opening (52) in the direction of the inlet (53);
(iii). the largest internal dimension in straight cross section of the terminal segment (55e) increases continuously from the value D2.1 of the terminal opening (52) forming one of the ends of the terminal segment (55t) up to the value D2.2 of the other end (55e) of the terminal segment (55t).

3. Method according to Claim 2, according to which the straight cross section of the terminal opening (52), of the terminal segment (55e) and preferably of the inlet (53) is circular, so that the terminal segment (55e) is frustoconical.

4. Method according to one at least of the preceding claims, according to which the guiding duct (6) is designed so that the flow of wet mortar is monodirectional and in that the angle $\alpha$ between the direction of the flow of wet mortar and the direction of the jet of spray fluid is such that:
$\alpha \leq 45°$; preferably $\alpha \leq 40°$ and more preferentially still $\alpha \leq 35°$.

5. Method according to Claim 1, according to which:

- $20 \leq D1$ (in mm) $\leq 60$; preferably $25 \leq D1$ (in mm) $\leq 55$; and more preferentially still $30 \leq D1$ (in mm) $\leq 50$;
- $10 \leq D2$ (in mm) $\leq 25$; preferably $13 \leq D2$ (in mm) $\leq 20$; and more preferentially still $15 \leq D2$ (in mm) $\leq 18$.

6. Method according to one at least of the preceding claims, according to which:

- the spray nozzle (50) has a frustoconical shape;
- and in that the internal angle $\gamma$ of this nozzle (50) is between 5° and 30°, preferably between 10° and 25° and more preferentially still between 10° and 20°.

7. Method according to one at least of the preceding claims, according to which:

- it comprises at least one connection end piece (60) mounted on the inlet (3) of the gun (1) body (2) provided for the admission of the flow of wet mortar;
- this end piece (60) has a minimum internal diameter D4;
- this end piece (60) is intended to be connected to a supply hose (30) for the flow of wet mortar, with a minimum internal diameter D3;
- and D3 = D4 +/- 10%.

8. Method according to one at least of the preceding claims, according to which:

- the injector (40) is a tube substantially coaxial with the direction X2-X2 of spraying;
- this tube (40) is fitted inside the gun (1) body (2) through the injection opening (4);
- this tube (40) can slide in translation with respect to the opening;
- the translational movement of this tube (40) with respect to the opening (4) can be blocked at different positions.

9. Method according to one at least of the preceding claims, according to which the aggregates are chosen from the group comprising - ideally constituted by:

(i) biobased fillers, preferably of plant origin, more preferentially biobased fillers of plant origin composed of cellulose, of cellulose and/or of lignin; and more preferentially still those chosen from the subgroup comprising - better still constituted by - hemp, flax, cereal straw, oats, rice, rapeseed, maize, sorghum, flax, miscanthus, rice husk, sugar cane, sunflower, kenaf, coconut, olive pits, bamboo, wood, typha or their mixtures; these biobased fillers of plant origin advantageously being provided in at least one particulate form, preferably chosen from fibres, piths, in particular sunflower, maize or rapeseed piths, fibrils, dusts, powders, shavings and their mixtures;
(ii) natural mineral fillers, preferably those chosen from the subgroup comprising - better still constituted by - pumice stones, volcanic rocks, quarry waste, aggregates from agricultural land, aggregates of marine and fluvial sediments;
(iii) synthetic mineral fillers, preferably those chosen from the subgroup comprising - better still constituted by - vermiculites, perlites, hollow glass beads, production waste or returns from the ceramics industry, such as earths or clays which are fresh, fired or fused, porcelain, electrofused or sintered abrasives, firing support, silica xerogel, glasses or glass-ceramics;
(iv) synthetic non-mineral fillers, preferably those chosen from the subgroup comprising - better still constituted by - thermoplastic, thermoset or elastomer derived plastics, loaded or not with mineral fillers, such as car bumpers, polymers reinforced with glass or carbon fibres, better still constituted by the wastes of the abovementioned synthetic non-mineral fillers which are difficult to recycle in the plastics industry;
(v) fillers resulting from industrial co-products or byproducts, preferably those chosen from the subgroup comprising - better still constituted by - slags, dross or cinders from primary or secondary metallurgy processes; advantageously slags from melting units, such as cupola furnaces, induction furnaces, arc furnaces or blast furnaces; from processing, transfer, holding or casting ladles, from converters, from decarburization or desulfurization units, from continuous casting units;
(vi) mineral sands used for sandblasting, shot blasting or pressure spray cleaning;
(vii) aggregates from the dismantling of civil engineering or building works, which are predominantly mineral, preferably chosen from the subgroup comprising - better still constituted by - concrete, cellular concrete, mortar, brick, natural stone, asphalt, tile, tiling, scrap iron or clinker waste and their mixtures;

(viii) aggregates from the dismantling of civil engineering or building works which are predominantly organic/mineral or organic, preferably composite materials, recycled insulating materials, advantageously chosen from the group comprising - ideally constituted by - polystyrenes, polyurethanes, phenolic resins, insulating materials made of wood, and their mixtures;

(ix) mixtures of aggregates (viii) with mineral matrices;

(x) aggregates from the dismantling of refractory linings, preferably those chosen from the subgroup comprising - better still constituted by - aggregates resulting from the demolition of monolithic refractories put in place by ramming or spray casting, from refractories made of bricks or from refractories resulting from shaped parts, such as filters, pouring nozzles, drawer plates or porous plugs;

(xi) plastics which cannot be recycled, such as used textile aggregates, plastics loaded with fillers (glass fibres or other mineral fillers), advantageously plastics constituting automobile bumpers, floor coverings of the linoleum type;

(xii) non-hazardous granular materials usually intended for landfill, used foundry sands, catalyst supports, desoding treatment supports from the Bayer process, clinker aggregates, fillers resulting in particular from the treatment of excavation sludge, sewage sludge, liquid manure, papermaking waste, papermaking incineration ash or household waste incineration ash;

these fillers (i) to (xii) advantageously being provided in at least one particulate form, and preferably being chosen from dusts, powders, shavings and their mixtures;

(xiii) and their mixtures.

10. Method according to Claim 1, according to which the pump (100) for circulating the wet mortar is chosen from eccentric screw pumps exhibiting at least one of the following characteristics:

P.1. pumping jacket with an air gap (E) between rotor (104) and stator (102) of between 4 and 30 mm, preferably between 6 and 10 mm;

P.4. pumping jacket with a stator (102) made of elastomer with a Shore hardness of between 30 and 60, preferably between 35 and 50 and more preferentially still of the order of 43;

P.5. a bursting pressure of less than or equal to 150 bar, preferably of between 100 and 120 bar;

P.6. a working pressure for the flow of wet mortar of between 10 and 30 bar, preferably between 15 and 20 bar.

11. Method according to Claim 1 or Claim 10, comprising at least one of the following additional elements:

• at least one source (200) of wet mortar;
• at least one spray fluid compressor (110);
• at least one supply duct (30) for the flow of wet mortar;
• at least one pipe (45) for feeding with spray fluid.

12. Method according to Claim 1, according to which the construction element made of hardened mortar is chosen from the group comprising - ideally constituted by - an interior or exterior façade rendering, a smooth surface and/or a raised surface for floors, a roof filling, a filling of frame building formwork, a prefabrication element, a technical and/or sound insulation mortar.

FIG. 1

FIG. 1A

**FIG. 2**

**FIG. 2A**

**FIG. 3**

FIG. 3A

FIG. 4

**FIG. 5**

**FIG. 5A**

**FIG. 6**

**EP 3 960 962 B1**

## RÉFÉRENCES CITÉES DANS LA DESCRIPTION

**Documents brevets cités dans la description**

- US 2016244375 A1
- DE 3916319 A1
- WO 2006018569 A
- WO 9745461 A1
- US 2512764 A
- US 2612845 A